(19) Europäisches Patentamt
European Patent Office
Office européen des brevets

(11) EP 3 297 949 B1

(12) FASCICULE DE BREVET EUROPEEN

(45) Date de publication et mention de la délivrance du brevet:
**12.02.2020 Bulletin 2020/07**

(21) Numéro de dépôt: **16729962.7**

(22) Date de dépôt: **19.05.2016**

(51) Int Cl.:
***C01B 13/36*** (2006.01) ***C01F 7/00*** (2006.01)
***C01F 7/16*** (2006.01) ***C01G 1/02*** (2006.01)
***C09C 1/40*** (2006.01) ***C08J 3/20*** (2006.01)
***C08L 101/16*** (2006.01)

(86) Numéro de dépôt international:
**PCT/FR2016/051189**

(87) Numéro de publication internationale:
**WO 2016/189228 (01.12.2016 Gazette 2016/48)**

(54) **HYDROXYDES DOUBLES LAMELLAIRES ORGANO-MODIFIES ET MATERIAUX POLYMERES COMPOSITES LES COMPRENANT**

ORGANOMODIFIZIERTEN GESCHICHTETE DOPPELHYDROXIDE UND ZUSAMMENGESETZTE POLYMERMATERIALIEN DAMIT

ORGANO-MODIFIED LAYERED DOUBLE HYDROXIDES AND COMPOSITE POLYMER MATERIALS COMPRISING THE SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.05.2015 FR 1554649**

(43) Date de publication de la demande:
**28.03.2018 Bulletin 2018/13**

(73) Titulaires:
- **Centre National de la Recherche Scientifique 75016 Paris (FR)**
- **Université Blaise Pascal - CLERMONT II 63006 Clermont-Ferrand Cedex 1 (FR)**
- **Alma Mater Studiorum - Università di Bologna 40126 Bologna (IT)**
- **Ecole Nationale Superieure de Chimie de Clermont Ferrand 63174 Aubiere Cedex (FR)**

(72) Inventeurs:
- **LEROUX, Fabrice 63171 Aubiere Cedex (FR)**
- **VERNEY, Vincent 63171 AUBIERE Cedex (FR)**
- **SISTI, Laura 40131 Bologne (IT)**
- **CELLI, Annamaria 40131 Bologne (IT)**
- **TOTARO, Grazia 40131 Bologne (IT)**

(74) Mandataire: **Lavoix 2, place d’Estienne d’Orves 75441 Paris Cedex 09 (FR)**

(56) Documents cités:
**US-A1- 2004 059 037**

- **A. SITI NURASIKIN, H. NORHAYATI, N. H. YUSRI, I. MD ISA, A. KAMARI, A. MOHAMED, M. I. MOHD DAMANHURI: "Synthesis and Characterization of Layered-Double Hydroxide 3-(4-Hydroxyphenyl) Propionate Nanocomposite", NANO HYBRIDS, vol. 7, 18 août 2014 (2014-08-18), pages 53-67, XP002755496, DOI: 10.4028/www.scientific.net/NH.7.53**
- **L. SISTI ET.AL.: "Poly(butylene succinate)/Layered Double HydroxideBionanocomposites: Relationships between Chemical Structure of LDHAnion, Delamination Strategy, and Final Properties", JOURNAL OF APPLIED POLYMER SCIENCE, 10 mai 2013 (2013-05-10), pages 1931-1940, XP002755497, DOI: 10.1002/app.39387**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 297 949 B1

- **NOBUO IYI, YASUO EBINA, AND TAKAYOSHI SASAKI: "Water-Swellable MgAl-LDH (Layered Double Hydroxide) Hybrids:Synthesis, Characterization, and Film Preparation", LANGMUIR, vol. 24, 29 avril 2008 (2008-04-29), pages 5591-5598, XP002755498, DOI: 10.1021/la800302w**
- **Dragoo Gudovan ET AL: "Send Orders for Reprints to reprints@benthamscience.ae Functionalized Magnetic Nanoparticles for Biomedical Applications", , 1 décembre 2015 (2015-12-01), pages 6038-6054, XP055292961, Extrait de l'Internet: URL:http://docserver.ingentaconnect.com/deliver/connect/ben/13816128/v21n42/s2.pdf?expires=1470150556&id=88305590&titleid=3901&accname=European+Patent+Office&checksum=6 D2A3DD8F84D1810866271EAF2EE6E09 [extrait le 2016-08-02]**

## Description

La présente invention concerne des hydroxydes doubles lamellaires organo-modifiés, ainsi que des matériaux polymères composites les comprenant. L'invention concerne en particulier des matériaux composites à base de polymères biosourcés comme le poly(butylène succinate) et d'hydroxydes doubles lamellaires organo-modifiés en particulier par l'acide 3-(4-hydroxyphényl)propionique (HPPA). Ces matériaux composites présentent des propriétés améliorées par rapport aux polymères entrant dans leur composition, et par rapport aux composites de l'art antérieur.

## Etat de la technique antérieure

L'utilisation de polymères en partie ou entièrement bio-sourcés à la place de polymères issus des énergies fossiles est un choix de plus en plus évident dans de nombreuses applications, en raison de l'évolution des normes environnementales, et de leur caractère de plus en plus contraignant. Malheureusement les propriétés intrinsèques des polymères bio-sourcés, bien souvent, ne leur permettent pas de remplacer les polymères déjà existants. L'un des obstacles majeurs à l'utilisation de polymères partiellement ou entièrement bio-sourcés est leur instabilité thermique, leur instabilité face à l'hydrolyse, leur trop grande perméabilité à l'eau, et souvent leur faible masse moléculaire.

Les polyesters aliphatiques représentent une classe prometteuse de matériaux plastiques à faible impact environnemental. Parmi ces matériaux, le poly(butylène succinate), également désigné PBS, présente des caractéristiques intéressantes. Il est synthétisé à partir d'acide succinique et de butane diol, qui tous deux peuvent être obtenus à partir de matériaux renouvelables. En outre le PBS est un thermoplastique semicristallin, biodégradable et doté d'une certaine résistance chimique et thermique qui le rendent potentiellement utilisable dans de nombreuses applications. Décrit dans la littérature comme étant un polymère à fort potentiel, le poly(butylène succinate) présente une tenue thermique insuffisante et une cinétique d'hydrolyse rapide. Le PBS non modifié présente une viscosité à l'état fondu insuffisante et n'est pas transformable par les méthodes classiques de transformation des matières plastiques, telles que l'extrusion et le soufflage par exemple. Il se caractérise également par de faibles propriétés de barrière aux gaz.

D'autres polymères potentiellement biosourcés tels que le polypropylène succinate, présentent des propriétés mécaniques insuffisantes pour envisager des applications intéressantes.

Il est connu de l'art antérieur de renforcer les propriétés de résistance à la chaleur et à l'hydrolyse des polymères, notamment du PBS, en utilisant des molécules organiques qui jouent le rôle d'extendeur de chaine. Toutefois, ces molécules organiques sont bien souvent toxiques comme par exemple le pyridine diméthanol connu comme extendeur de chaine pour le polyuréthane. D'autre part, les molécules n'étant pas engagées dans le processus d'extension de chaine peuvent migrer du fait de leur mobilité, entrainant différents problèmes en cascade : gradient de concentration par mobilité pouvant entrainer une augmentation de la perméabilité au sein du polymère, relargage de molécules en surface pouvant entrainer un problème environnemental et donc un surdosage lors de la fabrication. L'utilisation d'agent extendeur « hybride » selon l'invention permet de s'affranchir de l'ensemble de ces inconvénients.

On connaît de l'art antérieur des matériaux composites PBS / charges inorganiques, à base de silice, titane, nanotubes de carbone, graphène, qui présentent des propriétés améliorées par rapport aux polymères dont ils sont issus. De nombreuses publications décrivent des nanocomposites polymériques dérivés de phyllosilicates lamellaires. De tels polymères présentent une résistance améliorée à l'hydrolyse. Dans Vassiliou, A.A. et al., J. Applied Polym. Sci., 119, 2013, 1931-1939, la silice fumée y est décrite pour son action d'extendeur de chaine du PBS. En quantité plus importante, il est également indiqué que la présence de silice fumée entraine la formation de réseaux réticulés de PBS.

D'autres documents décrivent des composés de type hydrotalcite, également connus sous le nom d'hydroxydes doubles lamellaires (noté HDL), ou argiles anioniques, et leur utilisation pour la modification des propriétés de certains polymères. [Inorganic-Organic Hybrid Materials Based on Amino Acid Modified Hydrotalcites Used as UV-Absorber Fillers for Polybutylene Succinate. C. Coehlo, T. Stimpfling, V. Verney, F. Leroux, Eur. J. Inorg. Chem., 32, 5252-5258, 2012]; [X-ray diffraction and rheology cross-study of polymer chain penetrating surfactant tethered layered double hydroxide resulting into intermixed structure with polypropylene, poly(butylene)succinate and poly(dimethyl)siloxane. Fabrice Leroux, Antoine Dalod, Mohammed Hennous, Laura Sisti, Grazia Totaro, Annamaria Celli, Christian Coehlo, Vincent Verney. Applied Clay Science, 100, 102-111, 2014**]**; [Lignosulfonate interleaved layered double hydroxide: a novel green organoclay for bio-related polymer. Mohammed Hennous, Zoubir Derriche, Edwige Privas, Patrick Navard,Vincent Verney and Fabrice Leroux, Applied Clay Science, 71, 42-48, 2013**]** [Poly(butylene succinate)/Layered Double Hydroxide Bio-Nanocomposites: Relationships between Chemical Structure of LDH Anion, Delamination Strategy and Final Properties. Laura Sisti, Grazia Totaro, Maurizio Fiorini, Annamaria Celli, Christian Coehlo, Mohammed Hennous, Vincent Verney, Fabrice Leroux J. Applied Polym. Sci. 130, 1931-1940, 2013] décrivent de tels matériaux nanocomposites PBS/hydroxydes doubles lamellaires. Certains de ces matériaux sont à base d'un hydroxyde double lamellaire, organo modifié par une molécule de type acide hydroxy carboxylique, tel que l'acide citrique, l'acide ricinoléique, la tyrosine. Les HDL modifiés par la tyrosine ou le tryptophane ont des propriétés de résistance aux UV améliorées, et améliorent la résistance à la dégradation des chaines polymères dans lesquelles ils sont incorporés.

Toutefois, les propriétés des nanocomposites qui sont décrits dans ces documents sont insuffisantes, en particulier les propriétés mécaniques, pour permettre leur utilisation en remplacement des polymères issus de matériaux d'origine fossile. Dans certains cas de modification par des charges minérales, lorsque le PBS est réticulé sous forme de gel, il ne peut pas être extrudé, ou requiert un cisaillement trop important pour permettre son extrusion dans de bonnes conditions.

On connaît de l'art antérieur des matériaux hydroxydes doubles lamellaires (HDL) organo-modifiés par de l'acide 3-(4-hydroxyphényl)propionique (HPPA) pour le relargage contrôlé des herbicides en agriculture. Le matériau hydroxyde double lamellaire a pour but de libérer les molécules organiques, et non de les fixer. [Synthesis and Characterization of Layered-Double Hydroxide 3-(4-Hydroxyphenyl) Propionate Nanocomposite. A. Siti Nurasikin, H. Norhayati, N. H. Yusri, I. MD Isa, A. Kamari, A. Mohamed, M.I. Mohd Damanhuri. Nano Hybrids, 7, 53-67, 2014]

L'objectif de l'invention a été l'amélioration des propriétés, en particulier des propriétés mécaniques, de polymères biodégradables, potentiellement bio-sourcés, par augmentation de leur masse moléculaire, de leurs propriétés barrières et de leur tenue thermique sans aucune modification chimique de leur squelette moléculaire et donc ne nécessitant pas d'étape de chimie contraignante. En outre, on a cherché à mettre en œuvre des matériaux qui soient biosourcés ou capables d'être obtenus à partir de matériaux biosourcés. L'invention a également eu comme objectif d'obtenir des matériaux dont la dégradation ait un faible impact environnemental.

## Résumé de l'invention

L'invention repose sur le choix d'un composé particulier, l'acide 3-(4-hydroxyphényl)propionique (CAS 501-97-3) mis en œuvre dans la formation d'un matériau HDL organo modifié. Les matériaux HDL organo modifiés par l'acide 3-(4-hydroxyphényl)propionique (ou HPPA pour hydroxy(phenyl)propionic acid), présentent l'avantage de conduire à la formation de polymères composites présentant des propriétés mécaniques remarquables, notamment en comparaison avec les polymères composites issus d'HDL organo modifiés par d'autres molécules organiques, en particulier par d'autres hydroxyacides. Ces propriétés mécaniques remarquables se manifestent dès l'incorporation de très faibles quantités d'HDL organo modifié par l'acide 3-(4-hydroxyphényl)propionique.

Par ailleurs, l'acide 3-(4-hydroxyphényl)propionique est une molécule qui peut être biosourcée, qui peut être obtenue par synthèse enzymatique et dont la présence dans les polymères composites n'augmente pas l'impact environnemental lors de la dégradation de ces derniers.

Selon une variante de l'invention, à la place de l'acide 3-(4-hydroxyphényl)propionique, on peut mettre en oeuvre l'acide 2-(4-hydroxyphényl)éthylsulfonique, ou un acide 3-(hydroxyphényl)propènoïque.

L'invention concerne un matériau hydroxyde double lamellaire organo-modifié répondant à la formule (I) :

$$[M_{1-x}M'_x(OH)_2]^{x+}(HO\text{-}\phi\text{-}Y\text{-}X)_x.mH_2O \qquad (I)$$

dans laquelle :

- X représente un groupement choisi parmi : $-COO^-$ et $-SO_3^-$,
- Y représente un groupement choisi parmi : $-CH_2-CH_2-$ et -CH=CH-,
- $\phi$ représente un groupement phényle substitué en ortho, en méta ou en para, d'une part par le groupement hydroxyle, d'autre part par le groupement -Y-X,
- m représente un nombre allant de 0 à 2,
  et

  - soit :

    M représente un ou plusieurs cations choisis parmi : Mg, Zn, Co, Ni, Ca, Cu,
    M' représente un ou plusieurs cations choisis parmi : Al, Ga, Fe, Cr, et
    x représente un nombre, $0 < x < 1$ , de préférence $0{,}1 \leq x \leq 0{,}5$

  ou

  - soit :
    M représente Li, M' représente Al, et x=2/3.

L'invention concerne également un matériau composite comprenant au moins une matrice polymère à base de poly(butylène succinate) et/ou de poly(propylène succinate) et au moins un matériau hydroxyde double lamellaire organo-modifié répondant à la formule (I).

L'invention concerne encore un premier procédé de fabrication du matériau composite, comprenant :

- la fourniture d'un matériau hydroxyde double lamellaire organo-modifié répondant à la formule (I) :

$$[M_{1-x}M'_x(OH)_2]^{x+}(HO\text{-}\phi\text{-}Y\text{-}X)_x.mH_2O \qquad (I)$$

- la fourniture de la matrice polymère,
- le mélange du matériau de formule (I) et de la matrice polymère à une température supérieure ou égale à la température de fusion de la matrice polymère,
- l'extrusion du mélange.

L'invention concerne encore un second procédé de fabrication du matériau composite, comprenant :

- la fourniture d'un matériau hydroxyde double lamellaire organo-modifié répondant à la formule (I) :

$$[M_{1-x}M'_x(OH)_2]^{x+}(HO\text{-}\phi\text{-}Y\text{-}X)_x.mH_2O \qquad (I)$$

- la fourniture de précurseurs de la matrice polymère,
- le mélange du composé (I) et des précurseurs de la matrice polymère,
- l'application au mélange de conditions permettant la polymérisation des précurseurs.

L'invention concerne encore l'utilisation d'un matériau hydroxyde double lamellaire organo-modifié répondant à la formule (I) :

$$[M_{1-x}M'_x(OH)_2]^{x+}(HO\text{-}\phi\text{-}Y\text{-}X)_x.mH_2O \qquad (I)$$

pour conférer à une matrice de polymères des propriétés améliorées de résistance mécanique, d'étanchéité aux gaz, de transformabilité.

L'invention concerne encore un kit permettant la fabrication du matériau composite, ce kit comprenant au moins un matériau hydroxyde double lamellaire organo-modifié répondant à la formule (I)

$$[M_{1-x}M'_x(OH)_2]^{x+}(HO\text{-}\phi\text{-}Y\text{-}X)_x.mH_2O \qquad (I)$$

et au moins un poly(butylène succinate) ou un poly(propylène succinate) ou une composition de précurseurs de poly(butylène succinate) ou une composition de précurseurs de poly(propylène succinate).

Selon un mode de réalisation préféré, X représente $-COO^-$.

Selon un mode de réalisation préféré, Y représente $-CH_2-CH_2-$.

Selon un mode de réalisation préféré, $\phi$ est substitué en para.

**[0023]** Selon un mode de réalisation préféré, le composé de formule (I) répond à la formule (Ia) :

$$[M_{1-x}M'_x(OH)_2]^{x+}(HO\text{-}\phi\text{-}CH_2\text{-}CH_2\text{-}COO^-)_x.mH_2O \qquad (Ia)$$

dans laquelle $\phi$ est substitué en para.

**[0024]** Selon un mode de réalisation préféré, $0{,}2 \leq x \leq 0{,}4$.

Selon un mode de réalisation préféré, M représente un ou plusieurs cations choisis parmi Mg et Zn.

Selon un mode de réalisation préférée, M' représente un ou plusieurs cations choisis parmi Al et Fe.

Selon un mode de réalisation préféré :

Le composé de formule (I) répond à la formule (Ia) :

$$[M_{1-x}M'_x(OH)_2]^{x+}(HO\text{-}\phi\text{-}CH_2\text{-}CH_2\text{-}COO^-)_x.mH_2O \qquad (Ia)$$

dans laquelle $\phi$ est substitué en para,

$$0{,}1 \leq x \leq 0{,}5,$$

M représente un ou plusieurs cations choisis parmi Mg et Zn et M' représente un ou plusieurs cations choisis parmi Al et Fe.

Selon un mode de réalisation préféré :
Le composé de formule (I) répond à la formule (Ia) :

$$[M_{1-x}M'_x(OH)_2]^{x+}(HO\text{-}\phi\text{-}CH_2\text{-}CH_2\text{-}COO^-)_x.mH_2O \qquad (Ia)$$

dans laquelle $\phi$ est substitué en para,

$$0{,}2 \leq x \leq 0{,}4,$$

M représente un ou plusieurs cations choisis parmi Mg et Zn et M' représente un ou plusieurs cations choisis parmi Al et Fe.

Selon un mode de réalisation préféré, la matrice polymère est à base de poly(butylène succinate).

Selon un mode de réalisation préféré, la matrice polymère comprend un ou plusieurs polymères ou copolymères choisis parmi : la poly($\varepsilon$-caprolactone), le poly(acide lactique), le polyhydroxyalcanoate, le poly(éthylène téréphtalate), le poly(butylène téréphtalate), le poly(éthylène naphtalate), le poly(éthylène adipate), le poly(éthylène succinate), le poly(propylène succinate), le polypropylène, le polyéthylène, leurs copolymères et les copolymères qu'ils forment avec le poly(butylène succinate) (PBS).

Selon un mode de réalisation préféré, la matrice polymère est essentiellement constituée de poly(butylène succinate).

Selon un mode de réalisation préféré, le matériau (I) représente de 0,1 à 10% en masse par rapport à la masse totale de la matrice polymère.

L'approche polymère nanocomposite sur laquelle reposent les matériaux de l'invention permet de :

- augmenter la stabilité thermique du polymère,
- diminuer la perméabilité du polymère (gaz, solvants),
- améliorer les conditions de mise en œuvre car la processabilité est accordable en fonction des propriétés rhéologiques elles-mêmes modulables en fonction du taux de charge,
- augmenter les propriétés mécaniques et d'usage des polymères,
- éviter l'utilisation d'extendeurs de chaînes organiques qui sont relargués par la matrice polymérique et posent des problèmes de toxicité.

L'utilisation des hydroxydes doubles lamellaires comme matrice inorganique présente de multiples intérêts :

- les compositions des matériaux HDL choisis sont bio-compatibles (certains sont utilisés dans le domaine de la santé comme antiacides)
- il s'agit d'un matériau plaquettaire apportant de la tortuosité,
- les polymères composites les comprenant présentent un fort module mécanique et une tenue thermique élevée,
- ces matériaux sont bio-dégradables,
- certains HDL conduisent à un composite compatible avec un usage dans le domaine alimentaire.

Bien que de nombreux matériaux PBS composites aient été décrits dans l'art antérieur, dont d'autres PBS/HDL organo modifiés, il n'existe pas actuellement de polymère PBS nanocomposite présentant des modules mécaniques comparables à ceux obtenus selon l'invention. Il n'existe pas non plus de polymère PPS nanocomposite présentant des propriétés mécaniques (module) comparables à ceux obtenus selon l'invention. De façon remarquable, ces propriétés sont obtenues avec un ajout de très faibles quantités d'HDL organo-modifiés. Les propriétés des matériaux composites obtenus permettent leur transformation par des techniques courantes telles que l'extrusion.

Les matériaux de l'invention peuvent être obtenus par deux protocoles opératoires distincts :

- extrusion réactive amenant au couplage de chaine, et
- polycondensation in situ,

Ces procédés sont complémentaires et peuvent être adaptés à façon. Ils sont simples et peu coûteux à mettre en œuvre.

L'invention, contrairement à la technologie actuelle, propose une approche prenant en compte le cycle de vie du matériau (démarche LCA ou Life Cycle Assessment).

**Description détaillée**

L'expression « consiste essentiellement en » ou « est constitué essentiellement de » suivie d'une ou plusieurs caractéristiques, signifie que peuvent être inclus dans le procédé ou le matériau de l'invention, outre les composants ou étapes explicitement énumérés, des composants ou des étapes qui ne modifient pas significativement les propriétés et caractéristiques de l'invention.

Matériau hydroxyde double lamellaire (HDL) organo-modifié :

L'invention concerne des matériaux HDL organo-modifiés par l'acide hydroxyphényl propionique (ou HPPA pour hydroxyphenylpropionic acid), ou éventuellement par l'acide 2-(4-hydroxyphényl)éthylsulfonique ou par un acide hydroxyphénylpropènoïque.

Ces matériaux répondent à la formule (I) :

$$[M_{1-x}M'_x(OH)_2]^{x+}(HO\text{-}\phi\text{-}Y\text{-}X)_x.mH_2O \qquad (I)$$

dans laquelle :

- X représente un groupement choisi parmi : $-COO^-$ et $-SO_3^-$,
- Y représente un groupement choisi parmi : $-CH_2-CH_2-$ et $-CH=CH-$,
- $\phi$ représente un groupement phényle substitué en ortho, en méta ou en para, d'une part par le groupement hydroxyle, d'autre part par le groupement (-Y-X),
- m représente un nombre allant de 0 à 2,
  et

  - Soit :

    M représente un ou plusieurs cations divalents choisis parmi : Mg, Zn, Co, Ni, Ca, Cu,
    M' représente un ou plusieurs cations choisis parmi : Al, Ga, Fe, Cr, et
    x représente un nombre, $0 < x < 1$, de préférence $0,1 \leq x \leq 0,5$

  - Soit, selon une variante :
    M représente Li, M' représente Al, et x=2/3.

Selon un mode de réalisation préféré de l'invention, X représente $-COO^-$.

Selon un mode de réalisation préféré de l'invention, le composé de formule (I) répond à la formule (Ia) :

$$[M_{1-x}M'_x(OH)_2]^{x+}(HO\text{-}\phi\text{-}CH_2\text{-}CH_2\text{-}COO^-)_x.mH_2O \qquad (Ia)$$

dans laquelle $\phi$ est substitué en para.

**[0046]** Les HDL organo-modifiés sont des matériaux bien connus. Certains sont décrits notamment dans : Coelho, C et al., Eur. J. Inorg. Chem., 2012, 5252-5258 ; Hennous, M. et al., Applied Clay Science, 71, 2013, 42-48 ; Sisti L., et al., J. Applied Polym. Sci., 2013, 1931-1939.

Les matériaux de l'invention diffèrent de ceux décrits dans ces articles par le choix de la partie organique, et en particulier : l'acide 3-(4-hydroxyphényl) propionique, l'acide 2-(4-hydroxyphényl) éthylsulfonique, l'acide 3-(4-hydroxyphényl) propènoïque, l'acide 3-(3-hydroxyphényl) propènoïque, l'acide 3-(2-hydroxyphényl) propènoïque. Avantageusement l'invention concerne l'acide 3-(4-hydroxyphényl) propionique.

- Selon un premier mode de réalisation de l'invention :

  M représente un ou plusieurs cations divalents choisis parmi : Mg, Zn, Co, Ni, Ca, Cu,
  M' représente un ou plusieurs cations choisis parmi : Al, Ga, Fe, Cr
  x peut prendre des valeurs comprises entre 0 et 1, de préférence : $0,1 \leq x \leq 0,5$, encore mieux : $0,2 \leq x \leq 0,4$, ce qui correspond à : $1,5 \leq M/M' \leq 4$
  Les cations M sont également notés $M^{II}$, tandis que les cations M' sont également notés $M^{III}$.

Les matériaux de formule (I) présentent une structure cristalline, consistant en des couches formées d'unités octaèdres à côtés adjacents. Chaque octaèdre consiste en un cation $M^{II}$ ou $M^{III}$ entouré de six $OH^-$. La présence dans

une couche de cations $M^{III}$ induit un excès de charge positive qui est contrebalancé par un anion échangeable placé dans l'espace inter-couches, là où se trouvent également les molécules d'eau.

Dans la formule (I) une partie des cations M et/ou des cations M' peut être substitué par un ou plusieurs autres cations choisis dans les deux listes ci-dessus. Par exemple Mg peut représenter 95% des cations M tandis que Zn représente les 5% restants.

Selon un mode de réalisation préféré de l'invention M représente un ou plusieurs cations choisis parmi : Mg, Zn, Co, Ca, de préférence Mg et Zn.

M' (trivalent) représente un ou plusieurs cations choisis parmi: Al, Fe, Cr, Ga, de préférence Al et Fe.

Préférentiellement Mg représente au moins 50%, avantageusement au moins 75%, encore mieux, au moins 100% des cations M, et Al représente au moins 50%, avantageusement au moins 75%, encore mieux, au moins 100 % des cations M', les % étant exprimés en moles de chacun des cations choisis, rapporté au nombre de moles total de cation M et, respectivement, de cation M'.

Avantageusement, dans la formule (I) M représente Mg et M' représente Al. Ce choix présente l'avantage de fournir un matériau (I) non toxique, compatible avec une application dans le domaine alimentaire.

- Selon un second mode de réalisation de l'invention, le matériau (I) répond à la formule :

$$LiAl_2(OH)_6\ (HO\text{-}\phi\text{-}Y\text{-}X).mH_2O$$

Préférentiellement, selon cette variante, le matériau (I) répond à la formule :

$$LiAl_2(OH)_6\ (HO\text{-}\phi\text{-}CH_2\text{-}CH_2\text{-}COO^-).mH_2O$$

Ce matériau présente également l'avantage de fournir un matériau (I) non toxique, compatible avec une application dans le domaine alimentaire.

De façon connue, les HDL organo-modifiés sont organisés en feuilles de type brucite, dans lesquelles l'espèce anionique à l'intercouche peut être facilement échangée.

Ces matériaux sont préparés par mélange des sels $M^{+2}(A^{n-})_{2/n}$ et $M'^{+3}(A^{n-})_{3/n}$, et A représente un groupement anionique de valence n, avec :

- l'acide HO-$\phi$-Y-XH avantageusement l'acide HO-$\phi$-$CH_2$-$CH_2$-COOH,
- un sel alcalin ou alcalino-terreux de l'acide HO-$\phi$-Y-XH, avantageusement un sel de l'acide HO-$\phi$-$CH_2$-$CH_2$-COOH, avec $Li^+$, $Na^+$, $K^+$, $Mg^{2+}$, $Ca^{2+}$, ou
- un ester HO-$\phi$-Y-XR, avantageusement un ester HO-$\phi$-$CH_2$-$CH_2$-COOR, et R représente un groupement alkyle, aryle ou aralkyle. Par exemple R est choisi parmi : un groupement $CH_3$, $C_2H_5$.

Par exemple $A^{n-}$ peut être choisi parmi $NO_3^-$, $CO_3^{2-}$, $Cl^-$, $F^-$, $SO_4^{2-}$, $OH^-$, $CH_3COO^-$
Le mélange est réalisé en milieu aqueux basique, dans des conditions permettant de provoquer la précipitation des sels de formule (I). En pratique, on place le milieu réactionnel à un pH supérieur au pKa de l'acide organique concerné. Avantageusement, le mélange est réalisé à un pH allant de 7 à 11.

Les matériaux de formule (I) se présentent sous la forme de nanoparticules. Ils présentent l'avantage de pouvoir être contrôlés en termes de taille de particules.

Dans la formule (I), préférentiellement $0,2 \leq x \leq 0,4$
Le paramètre x est contrôlé par les proportions des sels que l'on introduit dans le mélange pour la formation du composé (I).

Lors de la fabrication du matériau de l'invention répondant à la formule (I), le groupement organique acide 3-(4-hydroxyphényl)propionique, ou éventuellement l'acide 2-(4-hydroxyphényl)éthylsulfonique, l'acide 3-(4-hydroxyphényl) propènoïque, l'acide 3-(3-hydroxyphényl) propènoïque, l'acide 3-(2-hydroxyphényl) propènoïque, peut être mis en œuvre en mélange avec d'autres groupements organiques à caractère anionique pour former un matériau HDL organo modifié comportant plusieurs substituants organiques. Selon ce mode de réalisation, on obtient :

Soit un mélange de matériaux, dont un matériau répondant à la formule (I) et au moins un second matériau similaire dont le groupement organique est différent,
Soit une co-intercalation des groupements organiques dans la matrice inorganique.

Selon cette variante de l'invention, une partie seulement du matériau obtenu répond à la formule (I), le reste

étant un HDL organo-modifié par au moins un autre anion organique.

Avantageusement, l'invention concerne une composition de matériau HDL organo modifié dont au moins 50%, ou préférentiellement au moins 75%, encore mieux, au moins 95% répond à la formule (I), avantageusement répond à la formule (Ia) avec ϕ substitué en para, les % étant exprimés en moles, rapporté au nombre de moles total de matériau (% évalué dans l'hypothèse d'une synthèse à taux de rendement de 100 %)

De façon préférentielle, l'invention concerne un matériau constitué essentiellement de composé (I), encore mieux, un matériau constitué essentiellement de composé (Ia) avec ϕ substitué en para.

**[0065]** Le choix des cations M et M' permet de contrôler certaines propriétés du matériau HDL organo-modifié lui-même, telles que : son absence de toxicité, son taux d'agrégation et de cristallinité et donc son facteur de forme, caractéristique importante pour l'effet barrière.

Le choix des cations M et M' permet également de contrôler certaines propriétés des matériaux composites polymère / HDL organo-modifié, telles que les propriétés optiques (transparence, couleur), biodégradabilité, anti-UV, mais aussi les propriétés d'oxygène « scavenger », anti-humidité, anti-biocide.

La structure des matériaux de formule (I) est confirmée par diffraction des rayons X (XRD).

Matériau composite polymère/ (HDL) organo-modifié :

L'invention concerne des matériaux composites à base d'HDL organo-modifié par l'acide 3-(4-hydroxyphényl) propionique (HPPA), ou éventuellement l'acide 2-(4-hydroxyphényl)éthylsulfonique, l'acide 3-(4-hydroxyphényl) propènoïque, l'acide 3-(3-hydroxyphényl) propènoïque, ou l'acide 3-(2-hydroxyphényl) propènoïque, et une matrice polymérique à base de poly(butylène succinate) (PBS), ou de poly(propylène succinate) (PPS).

De préférence, l'invention concerne des matériaux composites à base de poly(butylène succinate) (PBS).

Dans la présente description, l'expression « polymère » désigne aussi bien des homopolymères que des copolymères. Elle inclut les mélanges de polymères, les oligomères, les mélanges de monomères, d'oligomères et de polymères.

Le composé organique intercalaire du matériau (I), préférentiellement du matériau (Ia) avec ϕ substitué en para, peut être facilement substitué par des polymères ou réagir avec des polymères pour donner un matériau composite polymère / HDL organo-modifié.

Par matrice polymérique à base de poly(butylène succinate), on entend une composition de polymère qui comprend au moins un poly(butylène succinate) ou un copolymère de poly(butylène succinate) et d'au moins un autre polymère.

Par matrice polymérique à base de poly(propylène succinate), on entend une composition de polymère qui comprend au moins un poly(propylène succinate) ou un copolymère de poly(propylène succinate) et d'au moins un autre polymère.

Elle peut comprendre d'autres polymères et copolymères, préférentiellement des thermoplastiques.

Les autres (co)polymères sont avantageusement choisis parmi les polyesters et les copolymères de polyesters. Ce sont des thermoplastiques bien connus, dont certains sont susceptibles d'être obtenus à partir de matières premières renouvelables.

Comme exemple de polyester, on peut citer: la poly(ε-caprolactone) (PCL), le poly(acide lactique) (PLA), le polyhydroxyalcanoate (PHA), le poly(éthylène téréphtalate) (PET), le poly(butylène téréphtalate) (PBT), le poly(éthylène naphtalate) (PEN).

Comme exemple de copolymères de polyester, on peut citer : le poly(éthylène adipate) (PEA), le poly(éthylène succinate) (PES), le poly(propylène succinate) (PPS).

L'invention concerne également les copolymères obtenus à partir de différents monomères et oligomères précurseurs des polymères et copolymères cités ci-dessus, ainsi que leurs copolymères avec le poly(butylène succinate).

Elle concerne encore les mélanges de polymères et copolymères cités ci-dessus avec d'autres polymères et copolymères transformables par voie thermoplastique, comme les polyoléfines, par exemple le polypropylène, le polyéthylène (LDPE, HDPE), le polystyrène.

Préférentiellement, l'invention concerne les polymères et les copolymères susceptibles d'être produits à partir de ressources renouvelables, comme le poly(butylène succinate) (PBS) dont la formule est illustrée ci-dessous :

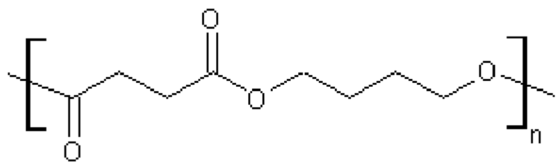

Le PBS est un polymère biodégradable bien connu, qui peut être biosourcé, et utilisé notamment pour des applications dans lesquelles sa bio-dégradabilité est un atout, par exemple pour la fabrication de couverts jetables, de filets de pêche, ou de films de paillage.

De préférence, l'invention met en œuvre des polymères, des copolymères et des mélanges de polymères et de copolymères dont au moins 50% en masse est du poly(butylène succinate), préférentiellement au moins 75% en masse est du poly(butylène succinate), encore mieux au moins 95% en masse est poly(butylène succinate).

Cela signifie qu'au moins 50% en masse (préférentiellement au moins 75%, encore mieux 95%) des polymères, ou des unités monomères ou oligomères d'un copolymère, ou des unités monomères ou oligomères d'un mélange de polymères et de copolymères, sont des unités butylène succinate.

Le pourcentage de poly(butylène succinate) ou d'unités butylène succinate dans un mélange est contrôlé par le choix des matières premières mises en œuvre pour réaliser la polymérisation et/ou le mélange de (co)polymères.

Selon le mode de réalisation préféré de l'invention, la matrice polymère est essentiellement constituée de poly(butylène succinate).

Comme exemple de poly(butylène succinates) disponibles commercialement susceptibles d'être mis en œuvre dans l'invention, on peut citer les produits suivants :

- PBE003 Nature Plast - grade extrusion, commercialisé par la société NaturePlast,
- Enpol IRE G4560 - grade fluide injection, commercialisé par la société Ire Chemical Ltd.

La matrice polymère peut en outre comprendre des additifs classiques tels que des plastifiants, des charges, des additifs (anti-UV, anti-oxydant, stabilisant, couleur).

La proportion de composé (I), préférentiellement de composé (Ia) avec $\phi$ substitué en para, et de matrice polymère dans le matériau composite est de préférence de 0,1 à 10%, avantageusement de 0,5% à 5% en masse de composé (I), préférentiellement de composé (Ia) avec $\phi$ substitué en para, par rapport à la masse de matrice polymère.

La biodégradabilité des matériaux composites de l'invention peut être évaluée par exemple au moyen d'une méthode respirométrique suivant le protocole ISO 14852 (milieu liquide aérobie) pour répondre à la norme EN 13432.

Procédés de fabrication du matériau composite

Le matériau de l'invention peut être fabriqué par deux procédés distincts :
Selon un premier mode de réalisation de l'invention, on mélange le matériau de formule (I) et la matrice polymère à une température supérieure ou égale à la température de fusion du ou des (co)polymère(s), puis on extrude le mélange.

Préférentiellement, la matrice polymère mise en œuvre est essentiellement constituée de PBS.

La température de fusion du PBS étant significativement inférieure à la température de dégradation des charges de formule (I), ce procédé peut être mis en œuvre avec une matrice à base de PBS sans risque de dégrader le HDL organo-modifié (I).

Dans le cas où la matrice de polymère présente une température de fusion proche de la température de dégradation des charges de formule (I), ou supérieure à cette température, on privilégie le procédé selon la seconde variante décrite ci-dessous.

Selon un second mode de réalisation de l'invention, on mélange le composé (I) et les précurseurs de la matrice polymère, puis on applique au mélange des conditions permettant la polymérisation des précurseurs pour former la matrice polymère.

Par précurseurs de polymères et de copolymères, on entend les monomères, oligomères, pré-polymères, polymères et copolymères, les agents réticulants.

Préférentiellement, les précurseurs de polymères mis en œuvre sont essentiellement constitués de précurseurs de PBS.

Les matières premières mises en œuvre pour produire le PBS, ou comme précurseurs de PBS, sont l'acide succinique et ses diesters ainsi que le 1,4-butanediol.

Les matières premières mises en œuvre pour produire le PPS, ou comme précurseurs de PPS, sont l'acide succinique et ses diesters ainsi que le 1,3-propanediol.

L'acide succinique est de préférence issu d'agro-ressources, ou bio-sourcé, mais peut également être d'origine fossile. Par exemple, l'acide succinique peut être produit par fermentation en utilisant des matières premières non fossiles renouvelables, comme décrit notamment dans la demande WO 2011/064151.

Parmi les diesters d'acide succinique qui peuvent être mis en œuvre pour la synthèse du composite, on peut mentionner avantageusement les succinates de dialkyle, par exemple le succinate de diméthyle ou de diéthyle, préférentiellement le succinate de diméthyle. Il peut être obtenu par réaction d'estérification de l'acide succinique.

Le 1,4-butanediol est de préférence issu de l'hydrogénation de l'acide succinique bio-sourcé ou obtenu au moyen d'une fermentation en présence de microorganismes. Il est également possible d'employer du 1,4-butanediol

d'origine fossile.

Le 1,3-propanediol est de préférence issu de l'hydrogénation de l'acide succinique bio-sourcé ou obtenu au moyen d'une fermentation en présence de microorganismes. Il est également possible d'employer du 1,3-propanediol d'origine fossile.

Parmi les conditions permettant de favoriser la polymérisation, on peut mentionner : une élévation de température, une pression inférieure à la pression atmosphérique, l'élimination des sous-produits de la réaction, l'utilisation d'un catalyseur.

Si l'on met en œuvre de l'acide succinique, la réaction d'estérification entraine la formation d'eau. Le procédé est avantageusement mis en œuvre avec élimination partielle ou totale de l'eau formée lors de cette réaction.

Si l'on met en œuvre un ester de l'acide succinique, la réaction de transestérification entraine la formation d'alcool. Le procédé est avantageusement mis en œuvre avec élimination partielle ou totale de l'alcool formé lors de cette réaction.

Selon chacune des deux variantes, la réaction peut être réalisée en présence d'un catalyseur d'estérification ou de trans-estérification, que l'on choisit de préférence inerte vis-à-vis de l'eau et/ou de l'alcool formé. Par exemple, le catalyseur peut être à base de titane ou de zirconium.

De préférence le procédé est mis en œuvre dans les conditions suivantes : utilisation de succinate de diméthyle, utilisation d'un catalyseur à base de titane, chauffage à une température supérieure ou égale à 170°C jusqu'à élimination du méthanol, chauffage à une température supérieure ou égale à 210°C, puis application d'un vide inférieur ou égal à 0,5 mbar.

Applications :

Les matériaux composites polymères / HDL organo-modifiés de l'invention peuvent être mis en œuvre dans toutes les applications des polymères thermoplastiques. Ils présentent l'avantage de propriétés mécaniques renforcées, ce qui permet d'envisager des modes de mise en œuvre nouveaux par rapport aux polymères biosourcés non modifiés : les composites de l'invention à base de PBS ou de PPS sont facilement extrudables.

Les matériaux composites de l'invention peuvent être transformés par des procédés classiques de transformation des thermoplastiques, comme par exemple par des méthodes d'extrusion-soufflage, d'extrusion-formage, d'extrusion-calandrage, d'extrusion-gonflage.

Les matériaux composites de l'invention peuvent par exemple servir à la fabrication de matériaux d'emballage, en particulier dans le domaine agro-alimentaire, en raison de leur absence de toxicité. Ils peuvent également être utilisés dans le domaine de l'agriculture, par exemple pour la fabrication de films agricoles.

Le choix de la matrice polymère et la sélection de la proportion de matériau (I) dans le composite permettent de contrôler la cinétique de dégradation du matériau.

**Figures :**

Figures 1, 2a, 2b, 3a, 3b : Représentation graphique de la viscoélasticité à la fusion de différents composites PBS / (Mg ou Zn: Al modifié HPPA) Diagramme Cole - Cole avec - abscisse : composante réelle de la viscosité complexe - ordonnée : composante imaginaire de la viscosité complexe.

Figures 4a, 4b, 5a, 5b : Représentation graphique de la viscoélasticité à la fusion de différents composites PBS / (Mg : Al modifié par HPPA ou différents tensioactifs) Diagramme Cole - Cole avec - abscisse : composante réelle de la viscosité complexe - ordonnée : composante imaginaire de la viscosité complexe.

Figures 6 : Représentation graphique de la viscoélasticité à la fusion de différents composites PPS / (Mg : Al modifié HPPA) Diagramme Cole - Cole avec - abscisse : composante réelle de la viscosité complexe - ordonnée : composante imaginaire de la viscosité complexe.

Figures 7 : Représentation graphique de la viscoélasticité à la fusion de différents composites PBSA/ (Mg : Al modifié HPPA) Diagramme Cole - Cole avec - abscisse : composante réelle de la viscosité complexe - ordonnée : composante imaginaire de la viscosité complexe.

Figure 1: PBS-$LDH_{ZnAl}$-HPPA *in situ* (protocole 3) (V) PBS NaturePlast ; (Δ) PBS-$LDH_{ZnAl}$-HPPA 1wt% ; (○) PBS-$LDH_{ZnAl}$-HPPA 3wt%; (□) PBS-$LDH_{ZnAl}$-HPPA 5wt% ; (◊) PBS-$LDH_{ZnAl}$-HPPA 10 wt%.

Figure 2 a: PBS-$LDH_{MgAl}$-HPPA *in situ* (protocole 3) (V) PBS NaturePlast; (∆) PBS-$LDH_{MgAl}$-HPPA 1wt% ; (○) PBS-$LDH_{MgAl}$-HPPA 3wt%; (□) PBS-$LDH_{MgAl}$-HPPA 5wt% ; (◊) PBS-$LDH_{MgAl}$-HPPA 10 wt%.

Figure 2 b: Agrandissement de la figure 2a entre 0 et 400 Pa.s PBS-$LDH_{MgAl}$-HPPA *in situ* (V) PBS NaturePlast ; (∆) PBS-$LDH_{MgAl}$-HPPA 1wt% ; (○) PBS-$LDH_{MgAl}$-HPPA 3wt%; (□) PBS-$LDH_{MgAl}$-HPPA 5wt% ; (◊) PBS-$LDH_{MgAl}$-HPPA 10 wt%.

Figure 3a : PBS-$LDH_{ZnAl}$-HPPA "ex-situ" (protocole 2) (V) PBS Enpol IRE G4560; (∆) PBS-$LDH_{ZnAl}$-HPPA 1wt% ; (x) PBS-$LDH_{ZnAl}$-HPPA 2.5wt%; (□) PBS-$LDH_{ZnAl}$-HPPA 5wt% ; (*) PBS-$LDH_{ZnAl}$-HPPA 7.5wt% ; (◊) PBS-$LDH_{ZnAl}$-HPPA 10 wt%.

Figure 3b : Agrandissement de la figure 3a entre 0 et 1000 Pa.s PBS-$LDH_{ZnAl}$-HPPA "ex situ" (V) PBS Enpol IRE G4560; (∆) PBS-$LDH_{ZnAl}$-HPPA 1wt% ; (x) PBS-$LDH_{ZnAl}$-HPPA 2.5wt%; (□) PBS-$LDH_{ZnAl}$-HPPA 5wt% ; (*) PBS-$LDH_{ZnAl}$-HPPA 7.5wt% ; (◊) PBS-$LDH_{ZnAl}$-HPPA 10 wt%.

Figure 4a: PBS-$LDH_{MgAl}$-HPPA *in situ* (protocole 3) (*) PBS préparé par polycondensation (protocole 3) ; (x) PBS-$LDH_{MgAl}$-HPPA 3wt% ; (∇) PBS-$LDH_{MgAl}$-citrate 3wt%; (♦) PBS-$LDH_{MgAl}$-succinate 3wt% ; (●) PBS-$LDH_{MgAl}$-sebacate 3wt% ; (□) PBS-$LDH_{MgAl}$-adipate 3 wt% ; (∆) PBS-$LDH_{MgAl}$-ricinoleate 3wt% .

Figure 4b: Agrandissement de la figure 4a entre 0 et 150 Pa.s PBS-$LDH_{MgAl}$-HPPA *in situ* (protocole 3) (*) PBS préparé par polycondensation (protocole 3) ; (x) PBS-$LDH_{MgAl}$-HPPA 3wt% ; (∇) PBS-$LDH_{MgAl}$-citrate 3wt%; (♦) PBS-$LDH_{MgAl}$-succinate 3wt% ; (●) PBS-$LDH_{MgAl}$-sebacate 3wt% ; (□) PBS-$LDH_{MgAl}$-adipate 3wt% ; (∆) PBS-$LDH_{MgAl}$-ricinoleate 3wt%.

Figure 5a: PBS-$LDH_{MgAl}$-HPPA "ex-situ" (protocole 2) (*) PBS Enpol IRE G4560; (x) PBS-$LDH_{MgAl}$-HPPA 2.5wt% ; (♦) PBS-$LDH_{MgAl}$-succinate 3wt%; (●) PBS-$LDH_{MgAl}$-sebacate 3wt% ; (□) PBS-$LDH_{MgAl}$-adipate 3wt%.

Figure 5b: Agrandissement de la figure 5a entre 0 et 250 Pa.s PBS-$LDH_{MgAl}$-HPPA "ex-situ" (protocole 2) (*) PBS Enpol IRE G4560; (x) PBS-$LDH_{MgAl}$-HPPA 2.5wt% ; (♦) PBS-$LDH_{MgAl}$-succinate 3wt%; (●) PBS-$LDH_{MgAl}$-sebacate 3wt% ; (□) PBS-$LDH_{MgAl}$-adipate 3wt%.

Figure 6: PPS-$LDH_{MgAl}$-HPPA "ex-situ" (protocole 2) (*) PPS (protocole 4) ; (●) PPS-$LDH_{MgAl}$-HPPA 1wt% ; (□) PPS-$LDH_{MgAl}$-HPPA 5wt%; (♦) PPS-$LDH_{MgAl}$-HPPA 10 wt%.

Figure 7: PBSA-$LDH_{MgAl}$-HPPA "ex-situ" (protocole 2) (*) ; PBSA (protocole 5) ; (●) PBSA-$LDH_{MgAl}$-HPPA 1wt% ; (□) PBSA-$LDH_{MgAl}$-HPPA 5wt%; (♦) PBSA-$LDH_{MgAl}$-HPPA 10 wt%.

**Partie expérimentale :**

I- Matériel et méthodes :

- Matières premières :

- PBS : un type de PBS a été utilisé pour le mélangeage réactif :
    - PBS1 : Enpol IRE G4560 - grade fluide injection, commercialisé par la société Ire Chemical Ltd.
    - PBS2 : PBE003 Nature Plast - grade extrusion, commercialisé par la société NaturePlast
- PPS (poly(propylène)succinate) : Il a été préparé selon le protocole 4
- PBSA (poly(butylène succinate-*co*-adipate) : Il a été préparé selon le protocole 5

- Procédés de transformation :

• Préparation de l'HDL organo-modifié (protocole 1) :

La synthèse est réalisée en « one pot » pour obtenir l'assemblage hybride soit sous forme de poudre, soit sous forme de pâte.

Une quantité de $M(NO_3)_2$ (M = Mg, Zn, Co, Ni, Ca, Cu) et de $M'(NO_3)_3$ (M' = Al, Ga, Fe, Co) est ajoutée dans un réacteur contenant une quantité de molécule organique de type acide carboxylique ou bien ester d'acide carboxylique (HPPA). Le pH du milieu est contrôlé à pH = $9\pm0.1$ par ajout de soude, l'ensemble étant placé sous azote. La coprécipitation des sels à pH basique est effectuée à température ambiante. La pâte formée est ensuite centrifugée et lavée 3 fois à l'eau dé-ionisée afin de retirer l'excès d'HPPA et de réactifs n'ayant pas réagi. Le rendement est élevé : aux environs de 95 % compte tenu du groupement formulaire théorique (calcul réalisé à partir de l'étude thermogravimétrique et une analyse chimique élémentaire).

• Extrusion (protocole 2) :

Les mélanges ont été réalisés à l'état fondu en extrusion bi-vis co-rotative à l'aide d'un micro-compoundeur THERMO Instrument. La quantité totale de matière introduite est d'environ 6 g (polymère + HDL organo-modifié), avec 1 ; 2,5 ; 5 ; 7,5 ; 10% de l'HDL organo-modifié en poids par rapport au poids de polymère, la vitesse de rotation des vis est de 100 tours/minute pour des temps de malaxage de 2 à 3 min maximum à 140°C. Un témoin (T1) est préparé sans charge.

• Polycondensation *in situ* (protocole 3) :

Un réacteur en verre à large col à fond concave (capacité de 250 ml) a été chargé avec 1, 3, 5, 10% de l'HDL organo-modifié (par exemple 1,4 g, qui correspond à 3% en poids par rapport au rendement théorique du polymère), du butanediol (30 g, 0,33 mol) et du tétrabutoxide de titane (0,06 g, 1,7 $10^{-4}$ mol).

- Le réacteur a été fermé avec un couvercle à trois cols équipé d'un agitateur mécanique et un couple-mètre. Le système est relié à un condenseur refroidi à l'eau et immergé dans un bain d'huile thermostaté à 190 °C, avec une agitation vigoureuse. Après une heure, le bain d'huile a été refroidi à 180 °C et le succinate de diméthyle (40 g, 0,27 mol) a été ajouté, la température a été ensuite portée à 190 °C et maintenue à cette valeur jusqu'à ce que le méthanol soit distillé (1 heure environ). Le distillat récupéré au cours de cette première étape dans le condenseur a été recueilli et analysé par FT-IR. La température a ensuite été augmentée à 230 °C, le couvercle a été chauffé à une température de 110 °C, avec un ruban chauffant et le réacteur est relié à un condenseur refroidi à l'azote liquide. Le vide dynamique a ensuite été appliqué en 60 minutes pour atteindre 0,1 mbar. Après un temps variable en fonction de la composition en cation (environ 90' pour la série $Mg_2Al$), un produit très visqueux, transparent et présentant une légère couleur brunâtre à l'état fondu a été retiré du réacteur. La structure moléculaire du PBS a été confirmée par RMN $^1H$.

• Polycondensation (protocole 4) :

Un réacteur en verre à large col à fond concave (capacité de 250 ml) a été chargé avec, du 1,3-propanediol (34 g, 0,45 mol) et le succinate de diméthyle (51 g, 0,35 mol) et du tétrabutoxide de titane (0,07 g, 2,0 $10^{-4}$ mol). Le réacteur a été fermé avec un couvercle à trois cols équipé d'un agitateur mécanique et un couple-mètre. Le système est relié à un condenseur refroidi à l'eau et immergé dans un bain d'huile thermostaté à 200 °C, avec une agitation de 340 tours/mn. Le couvercle a été chauffé à une température de 80 °C, avec un ruban chauffant. Le bain d'huile a été maintenu à 200 °C jusqu'à ce que le méthanol soit distillé (1 heure environ). Le distillat récupéré au cours de cette première étape dans le condenseur a été recueilli et analysé par FT-IR. Le couvercle a été chauffé à une température de 90 °C, et le réacteur est relié à un condenseur refroidi à l'azote liquide. La rampe de température jusqu'à 230 °C et le vide dynamique jusqu'à 0,9 mbar ont ensuite été appliqués pendant environ 60 minutes. Après environ 240', un produit très visqueux, transparent et présentant une légère couleur jaune, et à l'état fondu, a été retiré du réacteur. La structure moléculaire du PPS a été confirmée par RMN $^1H$.

• Polycondensation (protocole 5) :

Un réacteur en verre à large col à fond concave (capacité de 250 ml) a été chargé avec du 1,4-butanediol (40 g, 0,44 mol) et le succinate de diméthyle (43 g, 0,30 mol), l'adipate de diméthyle (13 g, 0,074 mol) et du tétrabutoxide

de titane (0,05 g, 1,6 $10^{-4}$ mol). Le réacteur a été fermé avec un couvercle à trois cols équipé d'un agitateur mécanique et un couple-mètre. Le système est relié à un condenseur refroidi à l'eau et immergé dans un bain d'huile thermostaté à 190 °C, avec une agitation de 200 tours/mn. Le couvercle a été chauffé à une température de 80 °C, avec un ruban chauffant. Le bain d'huile a été maintenu à 190 °C jusqu'à ce que le méthanol soit distillé (1 heure 30 minutes environ). Le distillat récupéré au cours de cette première étape dans le condenseur a été recueilli et analysé par FT-IR. Le couvercle a été chauffé à une température de 110 °C et le réacteur est relié à un condenseur refroidi à l'azote liquide. La rampe de température jusqu'à 230 °C et le vide dynamique jusqu'à 0,4 mbar ont ensuite été appliqués pendant environ 40 minutes. Après environ 300', un produit très visqueux, transparent et présentant une légère couleur jaune, et à l'état fondu, a été retiré du réacteur. La structure moléculaire du PBSA a été confirmée par RMN $^1H$.

- Méthodes de caractérisation :

- Diffraction aux rayons (DRX), Spectroscopie Infra-Rouge à Transformée de Fourier (IRTF), Analyse Thermogravimétrique (ATG), Analyse enthalpique différentielle (DSC), Analyse Mécanique Dynamique (DMTA).

Test de rhéologie : Les mesures rhéologiques ont été réalisées en géométrie plan-plan parallèle et en mode oscillatoire à l'aide d'un spectromètre mécanique ARESTA Instrument à des fréquences de sollicitations comprises entre 0,1 et 100 rad/s.

II- Synthèse :

• HDL organo-modifié :

Les matériaux suivants ont été préparés à partir de l'acide 3-(4-hydroxyphényl)propionique en suivant le protocole 1 ci-dessus :

Tableau 1 : Matériaux HDL modifiés HPPA

| Matériau | M | M' | Formule | Caractérisation |
|---|---|---|---|---|
| M1 | Mg | Al | $[Mg_{2/3}\,Al_{1/3}(OH)_2]^{1/3+}\,(HO\text{-}\phi\text{-}CH_2\text{-}CH_2\text{-}COO^-)_{1/3}.m\,H_2O$ | DRX, IRTF, ATG |
| M2 | Zn | Al | $[Zn_{2/3}\,Al_{1/3}(OPH)_2]^{1/3+}\,(HO\text{-}\phi\text{-}CH_2\text{-}CH_2\text{-}COO^-)_{1/3}.m\,H_2O$ | DRX, IRTF, ATG |

Les matériaux suivants ont été préparés à partir du dodécylsulfate de sodium (DDS), du succinate de sodium (SU), du sebacate de sodium (SE), de l'adipate de sodium (AD), de l'acide citrique (CA), et de l'acide ricinoléique (RA) en suivant le protocole 1 ci-dessus :

Tableau 2 : Matériaux HDL modifiés par le dodécylsulfate de sodium (DDS), le succinate de sodium (SU), le sébacate de sodium (SE), l'adipate de sodium (AD) l'acide citrique (CA), et l' acide ricinoléique (RA) (comparatif)

| N° matériau | M | M' | Anion organique | Formule | Caractérisation |
|---|---|---|---|---|---|
| M'1 | Mg | Al | DDS | $[Mg_{2/3}\,Al_{1/3}(OH)_2]^{1/3+}\,(DDS^-)_{1/3}.m\,H_2O$ | DRX, IRTF, ATG |
| M'2 | Zn | Al | DDS | $[Zn_{2/3}\,Al_{1/3}(OH)_2]^{1/3+}\,(DDS^-)_{1/3}.m\,H_2O$ | DRX, IRTF, ATG |
| M'3 | Mg | Al | SU | $[Mg_{2/3}\,Al_{1/3}(OH)_2]^{1/3+}\,(SU^{2-})_{0.16}\,m\,H_2O$ | DRX, IRTF, ATG |
| M'4 | Mg | Al | SE | $[Mg_{2/3}\,Al_{1/3}(OH)_2]^{1/3+}\,(SE^{2-})_{0.16}\,m\,H_2O$ | DRX, IRTF, ATG |
| M'5 | Mg | Al | AD | $[Mg_{2/3}\,Al_{1/3}(OH)_2]^{1/3+}\,(AD^{2-})_{0.16}\,m\,H_2O$ | DRX, IRTF, ATG |
| M'6 | Mg | Al | CA | $[Mg_{2/3}\,Al_{1/3}(OH)_2]^{1/3+}\,(CA^{3-})_{0.11}\,m\,H_2O$ | DRX, IRTF, ATG |

(suite)

| N° matériau | M | M' | Anion organique | Formule | Caractérisation |
|---|---|---|---|---|---|
| M'7 | Mg | Al | RA | $[Mg_{2/3} Al_{1/3}(OH)_2]^{1/3+} (RA^-)_{0.33}$ m $H_2O$ | DRX, IRTF, ATG |

• <u>Composite PBS/HDL organo-modifié :</u>

Les matériaux suivants ont été préparés en suivant le protocole 2 ci-dessus :

Tableau 3 : Matériaux PBS/ HDL organo-modifiés selon l'invention (C1 à C5), selon l'art antérieur (C'1 à C'5) et témoins (T1 à T2)

| N° composite | HDL organo-modifié | PBS | % massique HDL organo-modifié/PBS | Caractérisation | Figures |
|---|---|---|---|---|---|
| C1 | M2 | PBS1 | 1 | DRX, ATG, rhéologie, | 3 |
| C2 | M2 | PBS1 | 2.5 | DRX, ATG, rhéologie, | 3 |
| C3 | M2 | PBS1 | 5 | DRX, ATG, rhéologie, | 3 |
| C4 | M2 | PBS1 | 7.5 | DRX, ATG, rhéologie, | 3 |
| C5 | M2 | PBS1 | 10 | DRX, ATG, rhéologie, | 3 |
| C'1 | M'1 | PBS1 | 5 | DRX, ATG, rhéologie | - |
| C'2 | M'2 | PBS1 | 5 | DRX, ATG, rhéologie | - |
| C'3 | M'3 | PBS2 | 3 | DRX, ATG, rhéologie | 5 |
| C'4 | M'4 | PBS2 | 3 | DRX, ATG, rhéologie | 5 |
| C'5 | M'5 | PBS2 | 3 | DRX, ATG, rhéologie | 5 |
| T1 | - | PBS1 | - | DRX, ATG, rhéologie | 1, 2a, 2b, 5a, 5b |
| T2 | - | PBS2 | - | DRX, ATG, rhéologie | 3a, 3b |

Les matériaux suivants ont été préparés en suivant le protocole 3 ci-dessus :

Tableau 4 : Matériaux PBS/ HDL organo-modifiés selon l'invention (C6 à C13), selon l'art antérieur (C'6 à C'10)

| N° composite | HDL organo-modifié | % massique HDL organo-modifié/PBS | Caractérisation | Figures |
|---|---|---|---|---|
| C6 | M1 | 1 | DRX, DSC, ATG, rhéologie, DMTA | 2 |
| C7 | M1 | 3 | DRX, DSC, ATG, rhéologie, DMTA | 2 |
| C8 | M1 | 5 | DRX, DSC, ATG, rhéologie, DMTA | 2 |
| C9 | M1 | 10 | DRX, DSC, ATG, rhéologie, DMTA | 2 |
| C10 | M2 | 1 | DRX, DSC, ATG, rhéologie, DMTA | 1 |
| C11 | M2 | 3 | DRX, DSC, ATG, rhéologie, DMTA | 1 |

(suite)

| N° composite | HDL organo-modifié | % massique HDL organo-modifié/PBS | Caractérisation | Figures |
|---|---|---|---|---|
| C12 | M2 | 5 | DRX, DSC, ATG, rhéologie, DMTA | 1 |
| C13 | M2 | 10 | DRX, DSC, ATG, rhéologie, DMTA | 1 |
| C'6 | M'6 | 3 | DRX, DSC, ATG, rhéologie, DMTA | 4 |
| C'7 | M'3 | 3 | DRX, DSC, ATG, rhéologie, DMTA | 4 |
| C'8 | M'4 | 3 | DRX, DSC, ATG, rhéologie, DMTA | 4 |
| C'9 | M'5 | 3 | DRX, DSC, ATG, rhéologie, DMTA | 4 |
| C'10 | M'7 | 3 | DRX, DSC, ATG, rhéologie, DMTA | 4 |

• Composite PPS/HDL organo-modifié :

Les matériaux suivants ont été préparés en suivant le protocole 2. Le témoin a été préparé suivant le protocole 4.

Tableau 5 : Matériaux PPS/HDL organo-modifiés selon l'invention (C14 à C16) et témoin (T3)

| N° composite | HDL organo-modifié | PPS | % massique HDL organo-modifié/PPS | Caractérisation | Figures |
|---|---|---|---|---|---|
| C14 | M1 | PPS | 1 | DRX, DSC, ATG, rhéologie | 6 |
| C15 | M1 | PPS | 5 | DRX, DSC, ATG, rhéologie | 6 |
| C16 | M1 | PPS | 10 | DRX, DSC, ATG, rhéologie | 6 |
| T3 | - | PPS | | DRX, DSC, ATG, rhéologie | 6 |

• Composite PBSA/HDL organo-modifié :

Les matériaux suivants ont été préparés en suivant le protocole 2. Le témoin a été préparé suivant le protocole 5.

Tableau 6 : Matériaux PBSA/HDL organo-modifiés selon l'invention (C17 à C19) et témoin (T4)

| N° composite | HDL organo-modifié | PBSA | % massique HDL organo-modifié/PPS | Caractérisation | Figures |
|---|---|---|---|---|---|
| C17 | M1 | PBSA | 1 | DRX, DSC, ATG, rhéologie | 7 |
| C18 | M1 | PBSA | 5 | DRX, DSC, ATG, rhéologie | 7 |
| C19 | M1 | PBSA | 10 | DRX, DSC, ATG, rhéologie | 7 |

(suite)

| N° composite | HDL organo-modifié | PBSA | % massique HDL organo-modifié/PPS | Caractérisation | Figures |
|---|---|---|---|---|---|
| T4 | - | PBSA | | DRX, DSC, ATG, rhéologie | 7 |

III- Résultats:

Les figures 1, 2 et 3 illustrent l'effet de l'introduction de la charge M1 (Mg: Al modifiée HPPA) et M2 (Zn: Al modifiée HPPA) en quantité variable par rapport au PBS. Le composite est issu des protocoles 2 et 3. On constate un très fort effet sur les composantes élastiques et visqueuses de la viscosité complexe qui se traduit sur le diagramme Cole -Cole par une augmentation importante de la viscosité newtonienne $\eta_0$ (extrapolation de l'arc de cercle sur l'axe des réels). Cette viscosité newtonienne étant directement proportionnelle à la masse moléculaire, cela traduit un effet « allongeur de chaînes » indiscutable. A noter que pour un taux de 10 %, un seuil de comportement type « gel » est atteint au moyen de la méthode de préparation in situ, et indépendamment de la nature de M.

Un matériau HDL organo-modifié par le tensio actif dodécylsulfate sert de charge de référence pour les contre-exemples C'1, C'2 (protocole ex-situ 1&2). Les témoins T1 et T2 sont des PBS disponibles commercialement mis en oeuvre sans charge.

Les charges HDL/DDS M'1 et M'2 sont utilisées à titre comparatif et sont représentatives des charges HDL connues de l'art antérieur.

Les propriétés mécaniques (viscosité newtonienne) obtenues pour une dispersion de 5 % en masse de HDL/DDS (exemples comparatifs C'1, C'2) sont équivalentes à celles obtenues sans charge (témoin T2) ou bien nettement inférieures (témoin T1). La viscosité newtonienne $\eta_0$ (extrapolation de l'arc de cercle sur l'axe des réels) est en effet presque égale à celle de T2, ne montrant aucun effet de l'addition de charges sur la viscoélasticité des chaines. Pour le protocole ex-situ, la dispersion entraine un effet légèrement plastifiant avec une diminution de viscosité newtonienne $\eta_0$ par rapport au témoin T1.

Quantitativement :

T1 (témoin) : $\eta_0$ = 150 Pa.s (à 140°C),
C'1 (comparatif) : $\eta_0$ = 120 Pa.s (à 140°C)
C3 (selon l'invention) : $\eta_0$ > 1000 Pa.s (à 140°C)

Les figures 4 et 5 illustrent l'effet de l'introduction de HPPA par rapport à des tensioactifs tels que l'acide citrique (CA), le succinate de sodium (SU), le sébacate de sodium (SE), l'adipate de sodium (AD) et l'acide ricinoléique (RA) au sein du matériau PBS-$HDL_{MgAl}$. Les composites obtenus sont issus des protocoles 2 et 3. On constate que l'introduction de HPPA se traduit sur le diagramme Cole -Cole par une augmentation importante de la viscosité newtonienne $\eta_0$ (extrapolation de l'arc de cercle sur l'axe des réels) par rapport aux autres tensioactifs.

Les exemples illustrent des polyesters aliphatiques tels que le poly(butylène succinate), le poly(propylène)succinate et le poly(butylène succinate-co-adipate). Les figures 6 et 7 présentent des matériaux composites comprenant un $HDL_{MgAl}$ organomodifié par des quantités variables de l'HPPA et une matrice polymère telle que le poly(propylène)succinate ou le poly(butylène succinate-co-adipate). On constate un très fort effet sur les composantes élastiques et visqueuses de la viscosité complexe qui se traduit sur le diagramme Cole-Cole par une augmentation importante de la viscosité newtonienne $\eta_0$ (extrapolation de l'arc de cercle sur l'axe des réels).

**Revendications**

**1.** Matériau hydroxyde double lamellaire organo-modifié répondant à la formule (I) :

$$[M_{1-x}M'_x(OH)_2]^{x+}(HOP\text{-}\phi\text{-}Y\text{-}X)_x.mH_2O \qquad (I)$$

dans laquelle :

- X représente un groupement choisi parmi : $-COO^-$ et $-SO_3^-$,
- Y représente un groupement choisi parmi : $-CH_2-CH_2-$ et $-CH=CH-$,
- $\phi$ représente un groupement phényle substitué en ortho en méta ou en para, d'une part par le groupement

hydroxyle, d'autre part par le groupement -Y-X,
- m représente un nombre allant de 0 à 2,
et

• soit :

M représente un ou plusieurs cations choisis parmi : Mg, Zn, Co, Ni, Ca, Cu,
M' représente un ou plusieurs cations choisis parmi : Al, Ga, Fe, Cr, et
x représente un nombre, $0{,}1 \leq x \leq 0{,}5$,

ou

• soit :
M représente Li, M' représente Al, et x=2/3.

**2.** Matériau selon la revendication 1, dans lequel le composé X représente $-COO^-$

**3.** Matériau selon la revendication 1, dans lequel le composé Y représente $-CH_2-CH_2-$

**4.** Matériau selon la revendication 1, qui répond à la formule (Ia) :

$$[M_{1-x}M'_x(OH)_2]^{x+}(HO-\phi-CH_2-CH_2-COO^-)_x.mH_2O \qquad (Ia)$$

dans laquelle $\phi$ est substitué en para.

**5.** Matériau selon l'une quelconque des revendications précédentes dans lequel :

$$0{,}2 \leq x \leq 0{,}4$$

**6.** Matériau selon l'une quelconque des revendications précédentes dans lequel M représente un ou plusieurs cations choisis parmi Mg et Zn et M' représente un ou plusieurs cations choisis parmi Al et Fe.

**7.** Matériau selon la revendication 6 dans lequel Mg représente au moins 50%, de préference au moins 75% et plus préférentiellement 100% des cations M, et Al représente au moins 50%, de préférence au moins 75% et plus préférentiellement au moins 100% des cations M' ; les % étant exprimés en moles de chacun des cations choisis, rapporté au nombre de moles total de cation M et, respectivement, de cation M'.

**8.** Matériau composite comprenant au moins une matrice polymère à base de poly(butylène succinate) et/ou de poly(propylène succinate) et au moins un matériau hydroxyde double lamellaire organo-modifié répondant à la formule (I) selon l'une quelconque des revendications précédentes.

**9.** Matériau composite selon la revendication 8 comprenant au moins une matrice polymère à base de poly(butylène succinate).

**10.** Matériau composite selon la revendication 9, dans lequel la matrice polymère comprend un ou plusieurs polymères ou copolymères choisis parmi : la poly(ε-caprolactone), le poly(acide lactique), le polyhydroxyalcanoate, le poly(éthylène téréphtalate), le poly(butylène téréphtalate), le poly(éthylène naphtalate), le poly(éthylène adipate), le poly(éthylène succinate), le poly(propylène succinate), le polypropylène, le polyéthylène, leurs copolymères et les copolymères qu'ils forment avec le poly(butylène succinate) (PBS), avantageusement la matrice polymère est essentiellement constituée de poly(butylène succinate).

**11.** Matériau composite selon l'une quelconque des revendications 8 à 10, dans lequel le matériau (I) représente de 0,1 à 10% en masse par rapport à la masse totale de la matrice polymère.

**12.** Procédé de fabrication d'un matériau composite selon l'une quelconque des revendications 8 à 11, comprenant :

- la fourniture d'un matériau hydroxyde double lamellaire organo-modifié répondant à la formule (I) :

$$[M_{1-x}M'_x(OH)_2]^{x+}(HO\text{-}\phi\text{-}Y\text{-}X)_x.mH_2O \qquad (I)$$

- la fourniture de la matrice polymère,
- le mélange du matériau de formule (I) et de la matrice polymère à une température supérieure ou égale à la température de fusion de la matrice polymère,
- l'extrusion du mélange.

**13.** Procédé de fabrication d'un matériau composite selon l'une quelconque des revendications 8 à 11, comprenant :

- la fourniture d'un matériau hydroxyde double lamellaire organo-modifié répondant à la formule (I) :

$$[M_{1-x}M'_x(OH)_2]^{x+}(HOP\text{-}\phi\text{-}Y\text{-}X)_x.mH_2O \qquad (I)$$

- la fourniture de précurseurs de la matrice polymère,
- le mélange du composé (I) et des précurseurs de la matrice polymère,
- l'application au mélange de conditions permettant la polymérisation des précurseurs.

**14.** Utilisation d'un matériau hydroxyde double lamellaire organo-modifié répondant à la formule (I) selon l'une des revendications 1 à 7 pour conférer à une matrice de polymères des propriétés améliorées de résistance mécanique, d'étanchéité aux gaz, de transformabilité.

**15.** Kit permettant la fabrication d'un matériau composite selon l'une quelconque des revendications 8 à 11, ce kit comprenant au moins un matériau hydroxyde double lamellaire organo-modifié répondant à la formule (I) selon l'une des revendications 1 à 7 et au moins un poly(butylène succinate) ou un poly(propylène succinate) ou une composition de précurseurs de poly(butylène succinate) ou une composition de précurseurs de poly(propylène succinate).

## Patentansprüche

**1.** Doppellamellares, organo-modifiziertes Hydroxidmaterial der Formel (I):

$$[M_1\text{-}M'_x(OH)_2]^{x+}(HO\text{-}\phi\text{-}Y\text{-}X)_x.mH_2O \qquad (I)$$

in der:

- X eine Gruppe darstellt ausgewählt aus: $-COO^-$ und $-SO_3^-$,
- Y eine Gruppe darstellt ausgewählt aus: $-CH_2-CH_2-$ und -CH=CH-,
- $\phi$ eine Gruppe darstellt, die zum einen durch die Hydroxyl-Gruppe, zum anderen durch die -Y-X-Gruppe, in ortho-, meta- oder para-Stellung substituiert ist,
- m eine Zahl von 0 bis 2 darstellt

und

• entweder:

M eines oder mehrere Kationen darstellt ausgewählt aus: Mg, Zn, Co, Ni, Ca, Cu
M' eines oder mehrere Kationen darstellt ausgewählt aus: Al, Ga, Fe, Cr, und
x eine Zahl $0{,}1 \leq x \leq 0{,}5$ darstellt
oder

• oder:
M Li darstellt, M' Al darstellt und x=2/3.

**2.** Material gemäß Anspruch 1, in dem die Verbindung X $-COO^-$ darstellt.

**3.** Material gemäß Anspruch 1, in dem die Verbindung Y $-CH_2-CH_2-$darstellt.

**4.** Material gemäß Anspruch 1 mit der Formel (Ia):

$$[M_{1-x}M'_x(OH)_2]^{x+}(HO\text{-}\phi\text{-}CH_2\text{-}CH_2\text{-}COO^-)_x.mH_2O \qquad (Ia)$$

in dem $\phi$ in para-Stellung substituiert ist.

**5.** Material gemäß irgendeinem der vorangegangenen Ansprüche, in dem:

$$0{,}2 \leq x \leq 0{,}4.$$

**6.** Material gemäß irgendeinem der vorangegangenen Ansprüche, in dem M eines oder mehrere Kationen darstellt ausgewählt aus Mg und Zn und M' eines oder mehrere Kationen darstellt ausgewählt aus Al und Fe.

**7.** Material gemäß Anspruch 6, in dem Mg wenigstens 50%, vorzugsweise wenigstens 75% und bevorzugter 100%, der Kationen M darstellt, und Al wenigstens 50%, vorzugsweise wenigstens 75% und bevorzugter wenigstens 100%, der Kationen M' darstellt, wobei die % von jedem der ausgewählten Kationen in Mol ausgedrückt sind bezogen auf die Gesamtzahl an Mol von Kation M bzw. M'.

**8.** Verbundmaterial, welches aufweist wenigstens eine Polymermatrize basierend auf Poly(butylensuccinat) und/oder Poly(propylensuccinat) und wenigstens ein doppellamellares, organo-modifiziertes Hydroxidmaterial mit der Formel (I) gemäß irgendeinem der vorangegangenen Ansprüche.

**9.** Verbundmaterial gemäß Anspruch 8, welches wenigstens eine Polymermatrize basierend auf Poly(butylensuccinat) aufweist.

**10.** Verbundmaterial gemäß Anspruch 9, in dem die Polymermatrize eines oder mehrere Polymere oder Copolymere aufweist ausgewählt aus: Poly($\varepsilon$-caprolacton), Poly(milchsäure), Polyhydroxyalcanoat, Poly(ethylenterephtalat), Poly(butylenterephtalat), Poly(ethylennaphtalat), Poly(ethylenadipat), Poly(ethylensuccinat), Poly(propylensuccinat), Polypropylen, Polyethylen, deren Copolymere und die Copolymere, die sie mit Poly(butylensuccinat) (PBS) bilden, vorteilhafterweise besteht die Polymermatrize im Wesentlichen aus Poly(butylensuccinat).

**11.** Verbundmaterial gemäß irgendeinem der Ansprüche 8 bis 10, in dem das Material (I) 0,1 bis 10 Gew.% bezogen auf die Gesamtmasse der Polymermatrize darstellt.

**12.** Herstellungsverfahren eines Verbundmaterials gemäß irgendeinem der Ansprüche 8 bis 11, aufweisend:

- Bereitstellen eines doppellamellaren, organo-modifizierten Hydroxidmaterials mit der Formel (I):

$$[M_1\text{-}M'_x(OH)_2]^{x+}(HO\text{-}\phi\text{-}Y\text{-}X)_x.mH_2O \qquad (I)$$

- Bereitstellen der Polymermatrix
- Mischen des Materials mit der Formel (I) und der Polymermatrix bei einer Temperatur höher oder gleich der Schmelztemperatur der Polymermatrix,
- Extrudieren der Mischung.

**13.** Herstellungsverfahren eines Verbundmaterials gemäß irgendeinem der Ansprüche 8 bis 11, aufweisend:

- Bereitstellen eines doppellamellaren, organo-modifizierten Hydroxidmaterials mit der Formel (I):

$$[M_1\text{-}M'_x(OH)_2]^{x+}(HO\text{-}\phi\text{-}Y\text{-}X)_x.mH_2O \qquad (I)$$

- Bereitstellen von Ausgangsstoffen der Polymermatrix,
- Mischen der Verbindung (I) und der Ausgangsstoffe der Polymermatrix,
- auf die Mischung Anwenden von Bedingungen, welche die Polymerisation der Ausgangsstoffe ermöglichen.

**14.** Verwendung eines doppellamellaren, organo-modifizierten Hydroxidmaterials mit der Formel (I) gemäß einem der Ansprüche 1 bis 7, um einer Matrize von Polymeren verbesserte Eigenschaften hinsichtlich mechanischer Beständigkeit, Gasdichtheit, Veränderbarkeit zu verleihen.

**15.** Kit, welches die Herstellung eines Verbundmaterials gemäß irgendeinem der Ansprüche 8 bis 11 ermöglicht, wobei das Kit aufweist wenigstens ein doppellamellares, organo-modifiziertes Hydroxidmaterial mit der Formel (I) gemäß einem der Ansprüche 1 bis 7 und wenigstens ein Poly(butylensuccinat) oder ein Poly(propylensuccinat) oder eine Zusammensetzung von Poly(butylensuccinat)-Ausgangsstoffen oder eine Zusammensetzung von Poly(propylensuccinat)-Ausgangsstoffen.

## Claims

**1.** Organo-modified lamellar double hydroxide material corresponding to formula (I):

$$[M_{1-x}M'_x(OH)_2]^{x+}(HO\text{-}\Phi\text{-}Y\text{-}X)_x.mH_2O \qquad (I)$$

in which:

- X represents a group chosen from: $-COO^-$ and $-SO_3^-$,
- Y represents a group chosen from: $-CH_2-CH_2-$ and -CH=CH-,
- $\Phi$ represents a phenyl group substituted in ortho, in meta or in para, on the one hand by the hydroxyl group, on the other hand by the group -Y-X,
- m represents a number going from 0 to 2,

and

• if:

M represents one or more cations chosen from: Mg, Zn, Co, Ni, Ca, Cu,
M' represents one or more cations chosen from: Al, Ga, Fe, Cr, and
x represents a number $0.1 \leq x \leq 0.5$,

or

• if:
M represents Li, M' represents Al, and x = 2/3.

**2.** Material according to claim 1, in which the compound X represents $-COO^-$.

**3.** Material according to claim 1, in which the compound Y represents $-CH_2-CH_2-$.

**4.** Material according to claim 1, which corresponds to the formula (Ia):

$$[M_{1-x}M'_x(OH)_2]^{x+}(HO\text{-}\Phi\text{-}CH_2\text{-}CH_2\text{-}COO^-)_x.mH_2O \qquad (Ia)$$

in which $\Phi$ is substituted in para.

**5.** Material according to any of the preceding claims, in which:

$$0.2 \leq x \leq 0.4.$$

**6.** Material according to any of the preceding claims, in which M represents one or more cations chosen from Mg and Zn, and M' represents one or more cations chosen from Al and Fe.

**7.** Material according to claim 6, in which Mg represents at least 50%, preferably at least 75% and more preferably 100%, of cations M, and Al represents at least 50%, preferably at least 75% and more preferably at least 100%, of cations M'; the % being expressed in mols of each of the chosen cations, relative to the total number of mols of cation M and, respectively, of cation M'.

**8.** Composite material comprising at least one polymer matrix based on poly(butylene succinate) and/or poly(propylene succinate), and at least one organo-modified lamellar double hydroxide material corresponding to formula (I) according to any of the preceding claims.

**9.** Composite material according to claim 8 comprising at least one polymer matrix based on poly(butylene succinate).

**10.** Composite material according to claim 9, in which the polymer matrix comprises one or more polymers or copolymers chosen from: poly(ε-caprolactone), poly(lactic acid), polyhydroxyalkanoate, poly(ethylene terephthalate), poly(butylene terephthalate) poly(ethylene naphthalate), poly(ethylene adipate), poly(ethylene succinate), poly(propylene succinate), polypropylene, polyethylene, their copolymers and the copolymers which they form with poly(butylene succinate) (PBS), advantageously the polymer matrix is essentially formed from poly(butylene succinate).

**11.** Composite material according to any of the claims 8 to 10, in which the material (I) represents from 0.1 to 10% by mass relative to the total mass of the polymer matrix.

**12.** Method of manufacturing a composite material according to any of the claims 8 to 11 comprising:

- providing an organo-modified lamellar double hydroxide material corresponding to formula (I):

$$[M_{1-x}M'_x(OH)_2]^{x+}(HO\text{-}\Phi\text{-}Y\text{-}X)_x.mH_2O \qquad (I)$$

- providing the polymer matrix,
- mixing the material of formula (I) and the polymer matrix at a temperature greater than or equal to the melting temperature of the polymer matrix,
- extruding the mixture.

**13.** Method of manufacturing a composite material according to any of the claims 8 to 11, comprising:

- providing an organo-modified lamellar double hydroxide material corresponding to formula (I):

$$[M_{1-x}M'_x(OH)_2]^{x+}(HO\text{-}\Phi\text{-}Y\text{-}X)_x.mH_2O \qquad (I)$$

- providing precursors of the polymer matrix,
- mixing the compound (I) and precursors of the polymer matrix,
- applying to the mixture conditions allowing polymerisation of the precursors.

**14.** Use of an organo-modified lamellar double hydroxide material corresponding to formula (I) according to one of the claims 1 to 7 in order to confer to a polymer matrix improved properties of mechanical strength, impermeability to gases, transformability.

**15.** Kit allowing manufacture of a composite material according to any of the claims 8 to 11, this kit comprising at least one organo-modified lamellar double hydroxide material corresponding to formula (I) according to one of the claims 1 to 7 and at least one poly(butylene succinate) or one poly(propylene succinate) or a composition of precursors of poly(butylene succinate) or a composition of precursors of poly(propylene succinate).

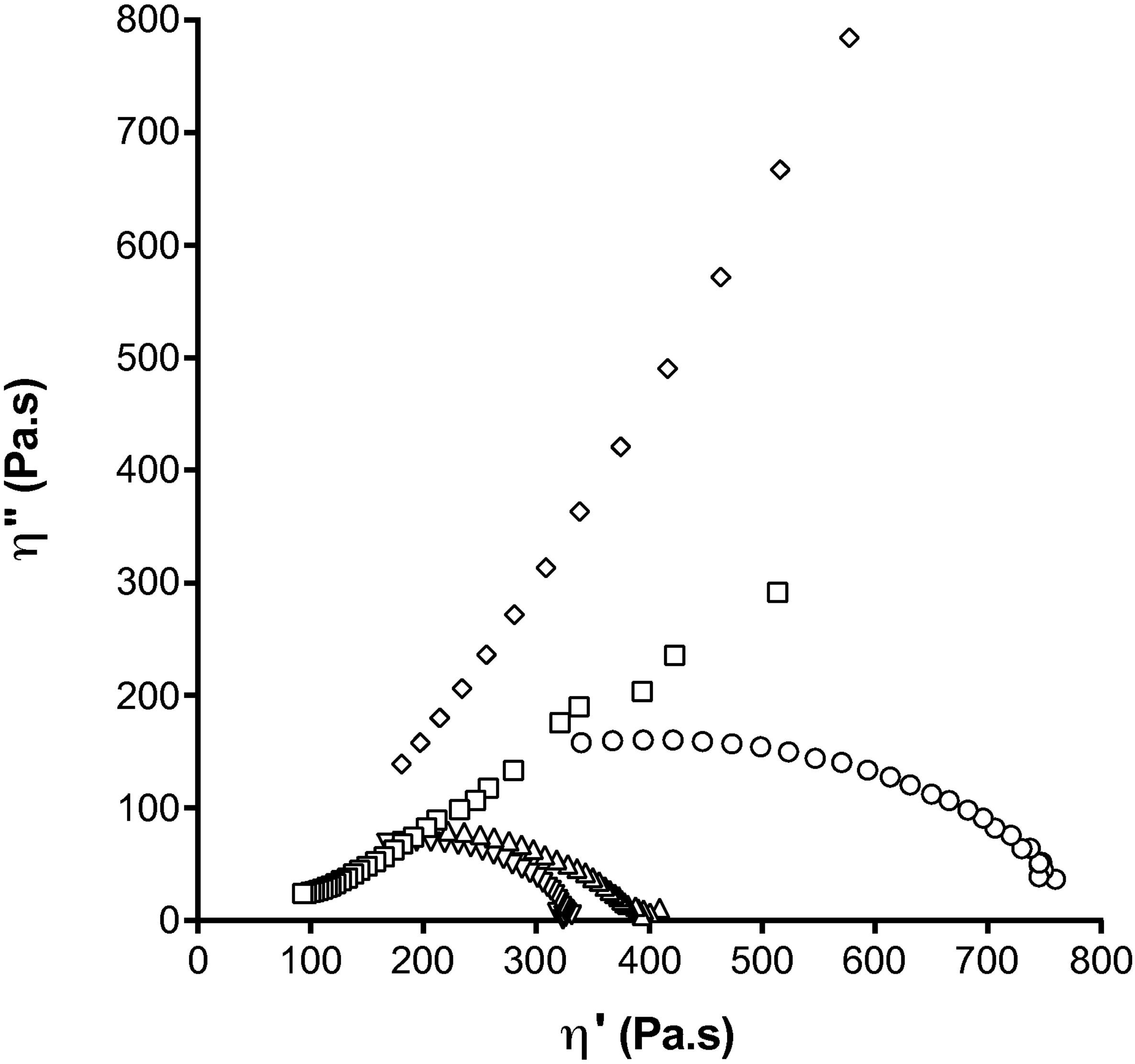
800
700
600
500
400
300
200
100
0
η'' (Pa.s)
0
100
200
300
400
500
600
700
800
η' (Pa.s)

Figure 1

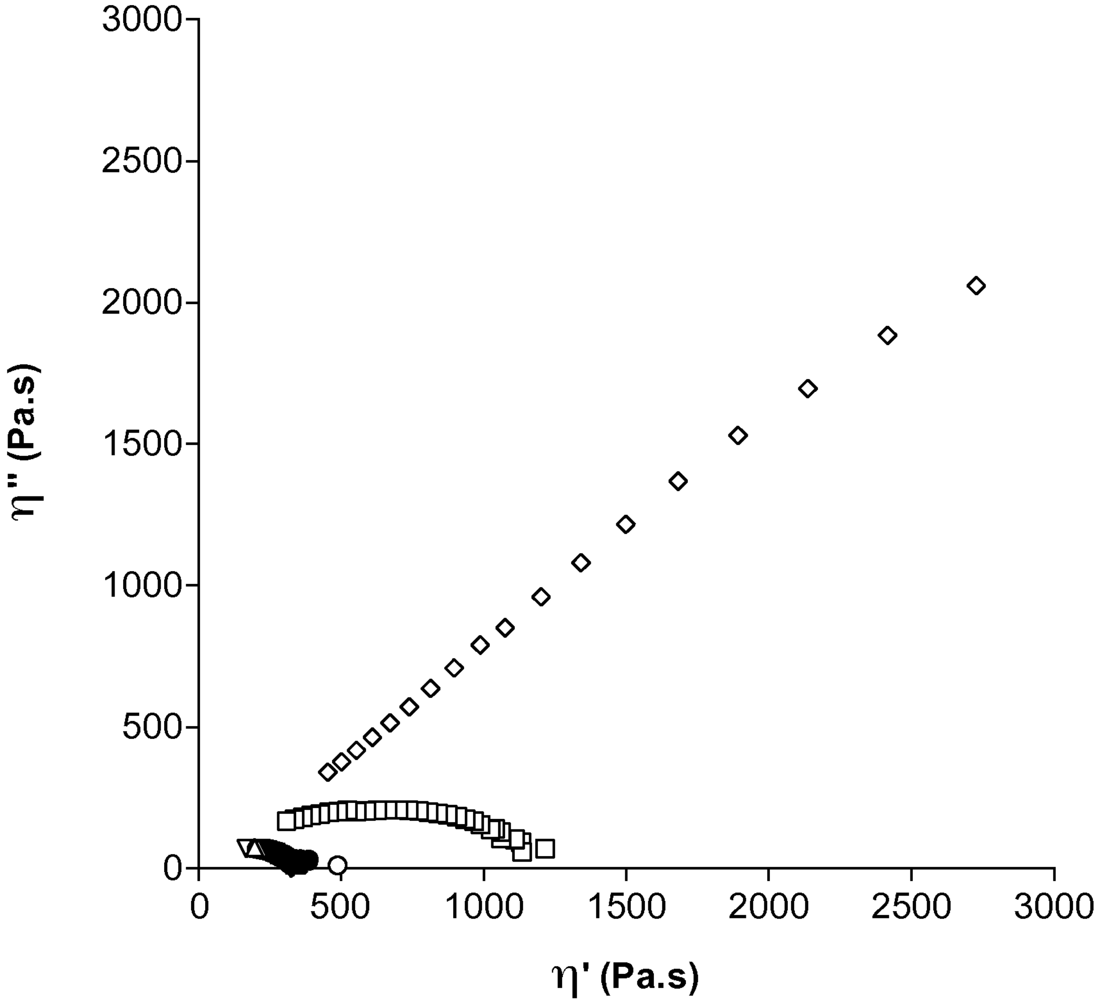
3000
2500
2000
1500
1000
500
0
η'' (Pa.s)
0
500
1000
1500
2000
2500
3000
η' (Pa.s)

Figure 2a

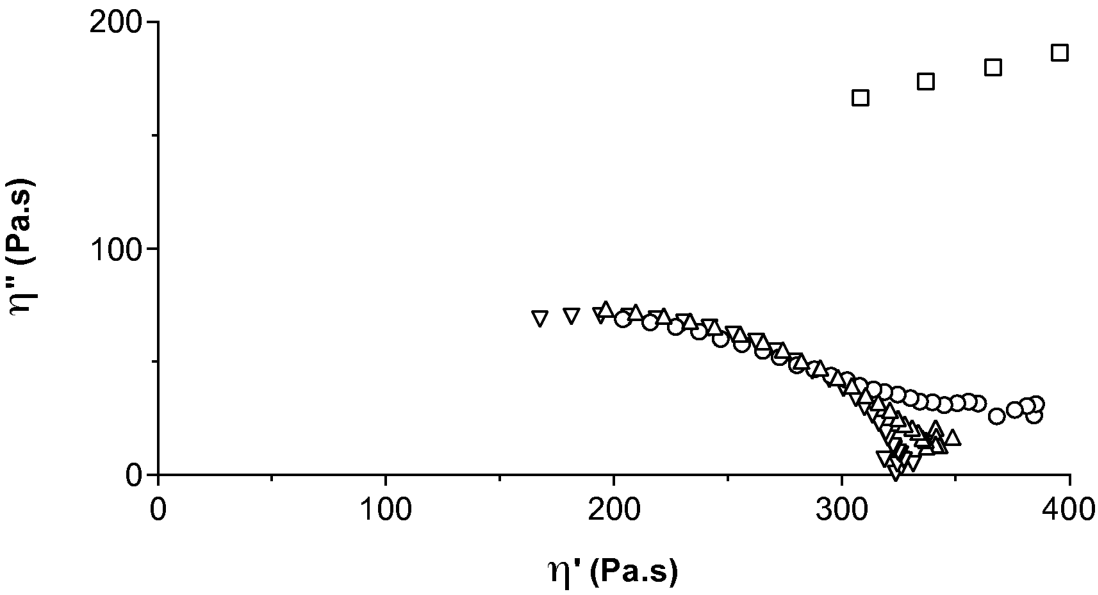


Figure 2b

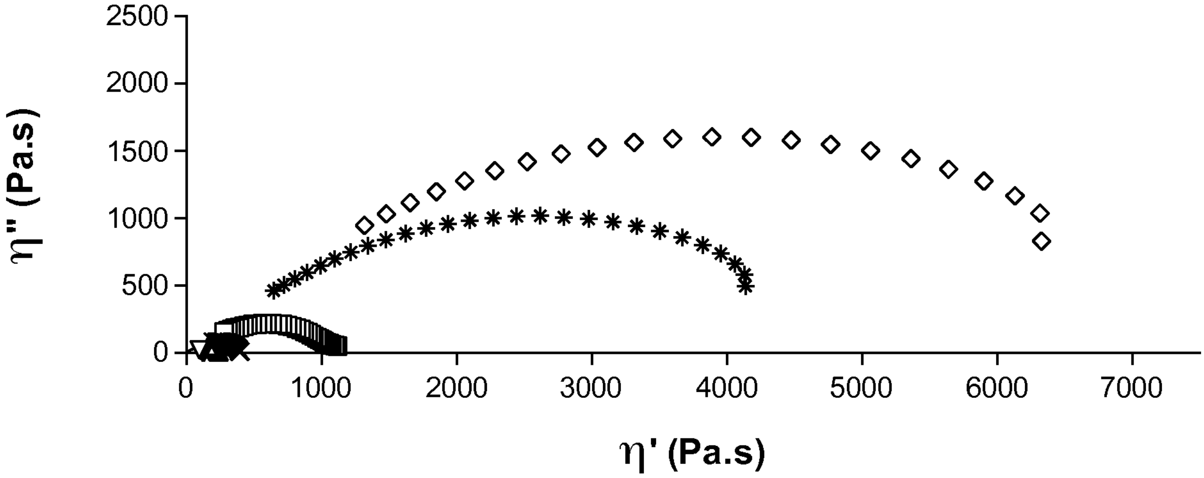
2500
2000
1500
1000
500
0
η" (Pa.s)
0
1000
2000
3000
4000
5000
6000
7000
η' (Pa.s)

Figure 3a

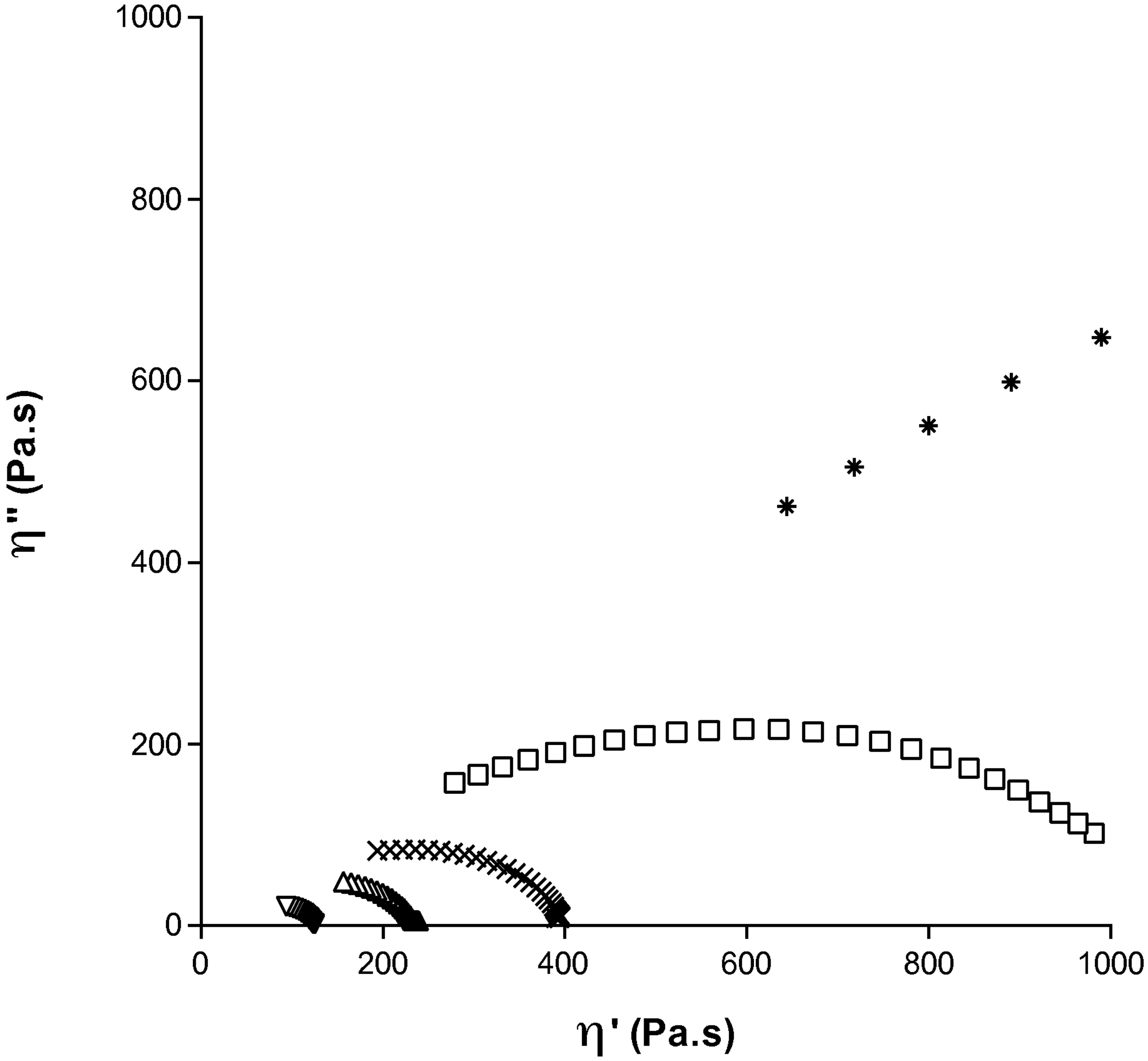


Figure 3b

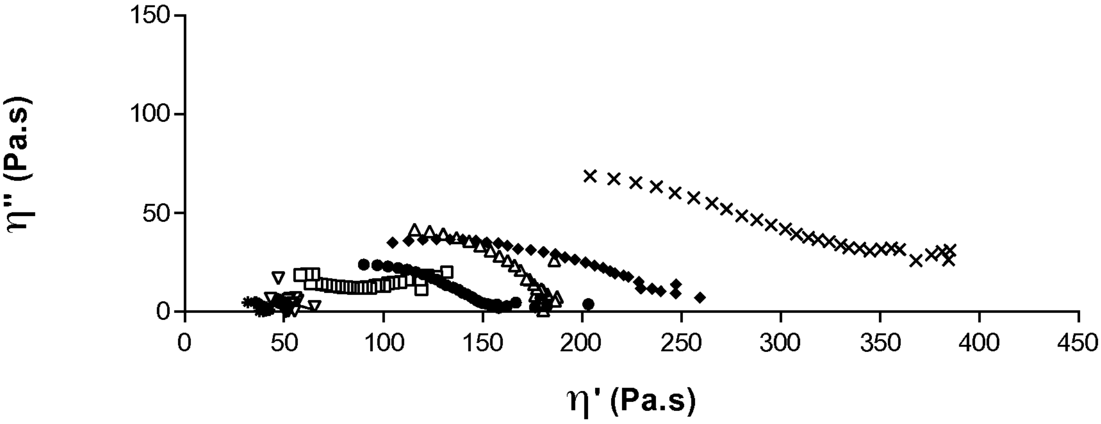


Figure 4a

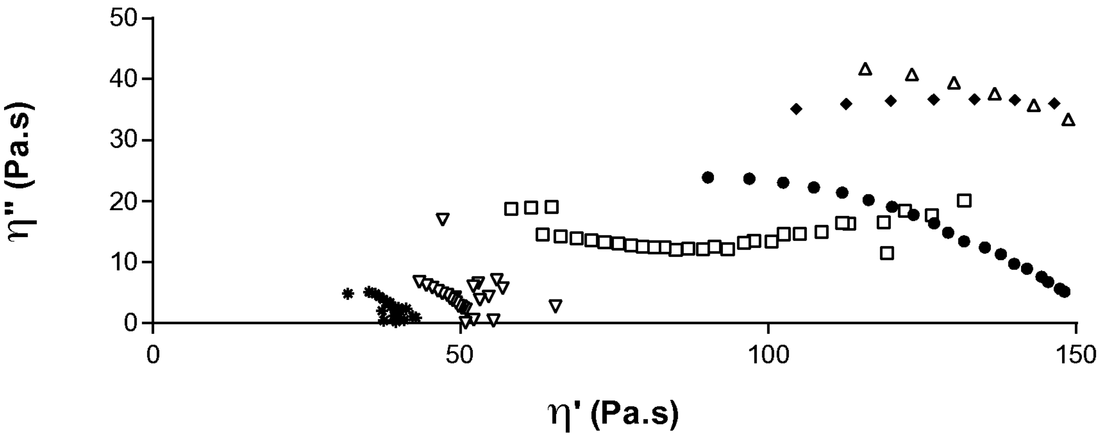


Figure 4b

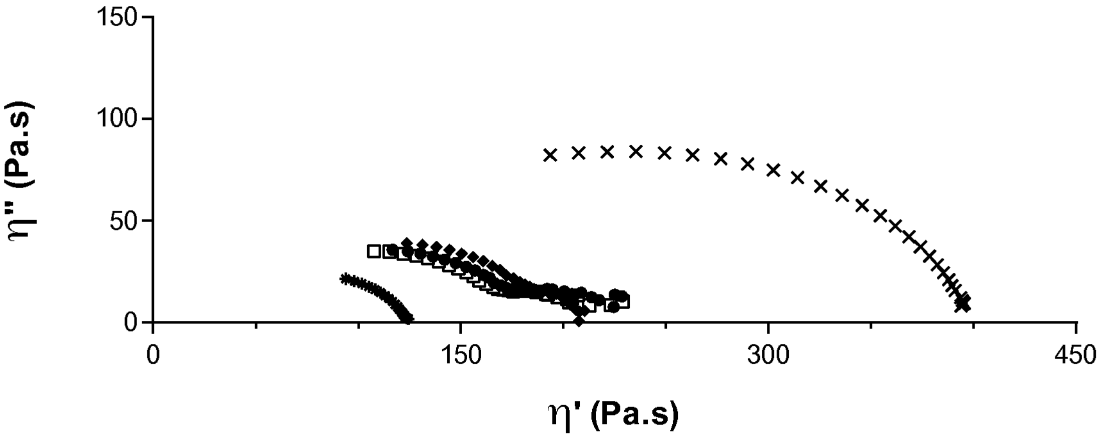


Figure 5a

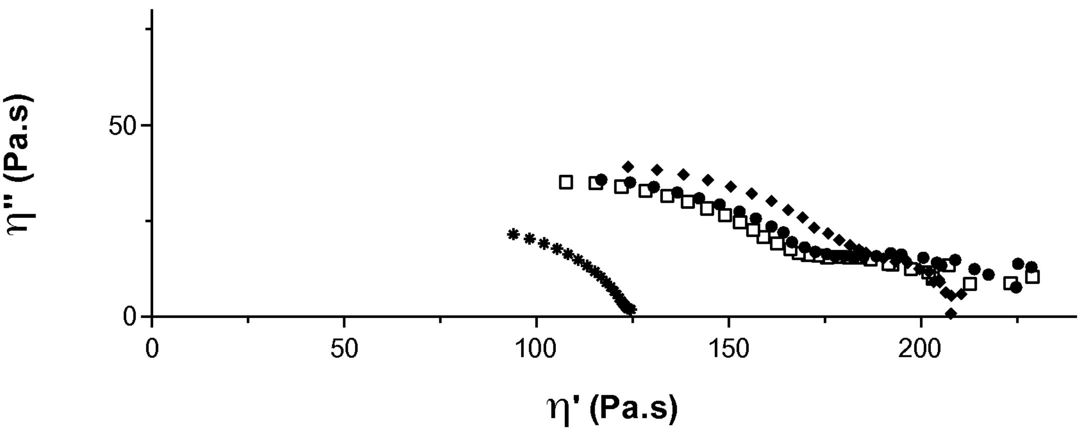


Figure 5b

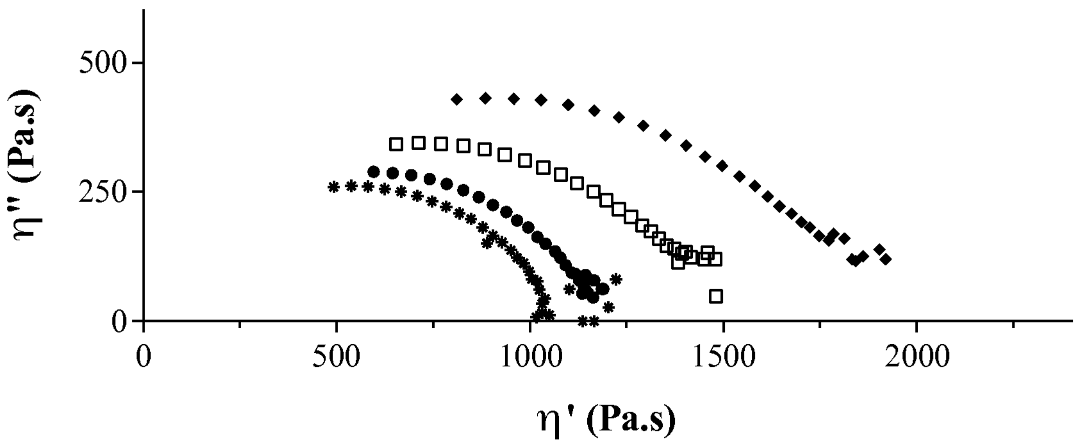


Figure 6

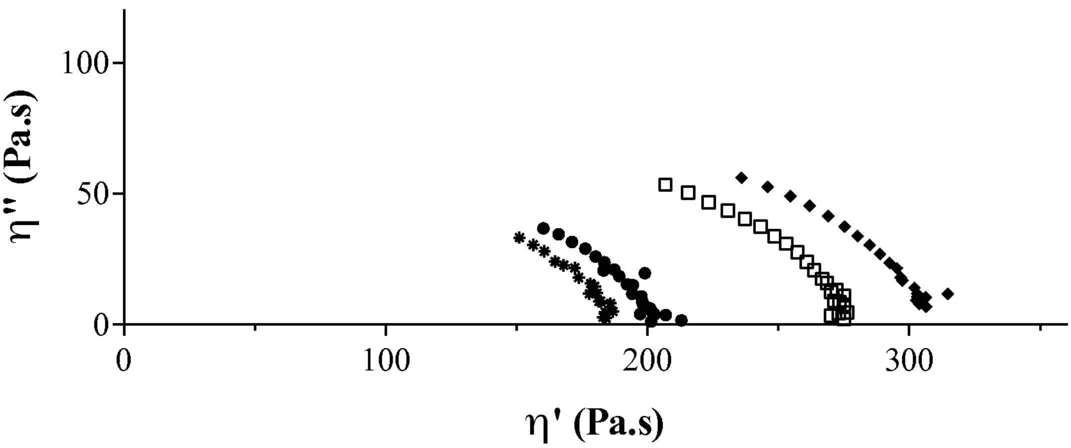


Figure 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2011064151 A


### Littérature non-brevet citée dans la description


- **VASSILIOU, A.A. et al.** *J. Applied Polym. Sci.,* 2013, vol. 119, 1931-1939
- **C. COEHLO ; T. STIMPFLING ; V. VERNEY ; F. LEROUX.** Inorganic-Organic Hybrid Materials Based on Amino Acid Modified Hydrotalcites Used as UV-Absorber Fillers for Polybutylene Succinate. *Eur. J. Inorg. Chem.,* 2012, vol. 32, 5252-5258
- **FABRICE LEROUX ; ANTOINE DALOD ; MOHAMMED HENNOUS ; LAURA SISTI ; GRAZIA TOTARO ; ANNAMARIA CELLI ; CHRISTIAN COEHLO ; VINCENT VERNEY.** *Applied Clay Science,* 2014, vol. 100, 102-111
- **MOHAMMED HENNOUS ; ZOUBIR DERRICHE ; EDWIGE PRIVAS ; PATRICK NAVARD ; VINCENT VERNEY ; FABRICE LEROUX.** Lignosulfonate interleaved layered double hydroxide: a novel green organoclay for bio-related polymer. *Applied Clay Science,* 2013, vol. 71, 42-48
- **LAURA SISTI ; GRAZIA TOTARO ; MAURIZIO FIORINI ; ANNAMARIA CELLI ; CHRISTIAN COEHLO ; MOHAMMED HENNOUS ; VINCENT VERNEY ; FABRICE LEROUX.** Poly(butylene succinate)/Layered Double Hydroxide Bio-Nanocomposites: Relationships between Chemical Structure of LDH Anion, Delamination Strategy and Final Properties. *J. Applied Polym. Sci.,* 2013, vol. 130, 1931-1940
- **A. SITI NURASIKIN ; H. NORHAYATI ; N. H. YUSRI ; I. MD ISA ; A. KAMARI ; A. MOHAMED ; M.I. MOHD DAMANHURI.** Synthesis and Characterization of Layered-Double Hydroxide 3-(4-Hydroxyphenyl) Propionate Nanocomposite. *Nano Hybrids,* 2014, vol. 7, 53-67
- **COELHO, C et al.** *Eur. J. Inorg. Chem.,* 2012, 5252-5258
- **HENNOUS, M. et al.** *Applied Clay Science,* 2013, vol. 71, 42-48
- **SISTI L. et al.** *J. Applied Polym. Sci.,* 2013, 1931-1939